(19) **Europäisches Patentamt**
**European Patent Office**
**Office européen des brevets**

(11) **EP 4 120 715 B1**

(12) **EUROPEAN PATENT SPECIFICATION**

(45) Date of publication and mention
of the grant of the patent:
**19.02.2025 Bulletin 2025/08**

(21) Application number: **22185022.5**

(22) Date of filing: **14.07.2022**

(51) International Patent Classification (IPC):
*H04W 16/14* (2009.01)   *H04W 56/00* (2009.01)

(52) Cooperative Patent Classification (CPC):
**H04W 16/14; H04W 56/001**

(54) **USER EQUIPMENT AND BASE STATION SUPPORTING DYNAMIC SPECTRUM SHARING, AND COMMUNICATION SYSTEM INCLUDING THE SAME**

BENUTZERGERÄT UND BASISSTATION ZUR UNTERSTÜTZUNG DER DYNAMISCHEN GEMEINSAMEN NUTZUNG DES SPEKTRUMS SOWIE EIN KOMMUNIKATIONSSYSTEM DAMIT

ÉQUIPEMENT UTILISATEUR ET STATION DE BASE PRENANT EN CHARGE LE PARTAGE DE SPECTRE DYNAMIQUE ET SYSTÈME DE COMMUNICATION L'INCLUANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2021   KR 20210093749**
**03.11.2021   KR 20210149951**

(43) Date of publication of application:
**18.01.2023 Bulletin 2023/03**

(73) Proprietor: **Samsung Electronics Co., Ltd.**
**Suwon-si, Gyeonggi-do 16677 (KR)**

(72) Inventors:
• **YOON, Hongsik**
**16677 Suwon-si (KR)**
• **OH, Jinwoo**
**16677 Suwon-si (KR)**
• **PARK, Jungmin**
**16677 Suwon-si (KR)**

(74) Representative: **Marks & Clerk LLP**
**15 Fetter Lane**
**London EC4A 1BW (GB)**

(56) References cited:
**WO-A1-2021/022395     WO-A1-2021/029298**

• **GOOGLE INC: "Views on dynamic spectrum sharing between LTE band 48 and NR band n48", vol. RAN WG4, no. Online; 20200224 - 20200306, 14 February 2020 (2020-02-14), XP051851892, Retrieved from the Internet <URL:https://ftp.3gpp. org/tsg_ran/WG4_Radio/TSGR4_94_e/ Docs/R4-2002048.zip> [retrieved on 20200214]**
• **SAMSUNG ET AL: "Discussions on Rel-16 TEI", vol. RAN WG1, no. e-Meeting; 20200224 - 20200306, 14 February 2020 (2020-02-14), XP051853079, Retrieved from the Internet <URL:https://ftp.3gpp. org/tsg_ran/WG1_RL1/TSGR1_100_e/ Docs/R1-2000895.zip> [retrieved on 20200214]**

**Description**

CROSS-REFERENCE TO RELATED APPLICATIONS

BACKGROUND

The present disclosure generally relates to wireless communications, and more particularly, to user equipment and base stations supporting dynamic spectrum sharing (DSS), and communication systems including the same.

Generally, communications systems (e.g., wireless communications systems) are deployed to provide various communication services such as data services, video services, audio services, messaging services, telecommunication services, broadcast services, etc. Further, communications systems may employ various technologies according to certain protocols to support communications between devices (e.g., to make communications compatible between differing networks and devices, to share available system resources efficiently, etc.).

With the advancement and evolution of wireless network technologies, such as Long-Term Evolution (LTE) networks (4G) and New Radio (NR) networks (5G), several new procedures have been proposed or are being implemented to provide a common platform for LTE networks and the NR networks to co-exist, as well as to provide network services to one or more user equipment connected to such networks simultaneously.

As one example, DSS techniques may be utilized by LTE systems and NR systems for co-existing network operations in a same spectrum (e.g., with a plurality of frequency bands). For instance, DSS may accommodate increased network congestion in a same frequency band by managing the sharing of the spectrum among the plurality of frequency bands hosting the LTE network and the NR network. In other words, DSS technology may support the smooth migration of NR networks to frequency bands of LTE networks. DSS technology may thus generally include various techniques and operations for dynamic coexistence of LTE networks with NR networks, for example, in a same frequency domain.

For example, as a cell reference signal (CRS) of a LTE network may be configured or implemented as an always-on signal, an LTE user equipment may expect that the CRS is always transmitted from an LTE base station (e.g., always transmitted in accordance with an established CRS allocation or an established CRS configuration in the LTE network). However, when a synchronization signal block (SSB) of a NR network overlaps with the resource to which the CRS of the LTE network is allocated, challenges arise in order to avoid the problem of collision between the SSBs of the NR network and the CRS of the LTE network. Accordingly, there is a need in the art for further improvements in wireless communications systems to overcome such challenges (as well as other challenges).

In "Views on dynamic spectrum sharing between LTE band 48 and NR band n48", 3GPP RAN WG4 Meeting #94-e, R4-2002048, Item 9.23.2, from Google Inc., there is described a discussion on dynamic spectrum sharing between NR and LTE.

In International Patent Application Publication WO2021/022395A1, there is described techniques for wireless communication. A method includes receiving from a transmission point or transmitting to a user equipment, over a wireless communication medium shared by a first radio access technology and a second radio access technology, downlink control information indicating a first symbol of a synchronization signal block for the second radio access technology within a multimedia broadcast single frequency network subframe, and receiving from the transmission point or transmitting to the user equipment the multimedia broadcast single frequency network subframe over the wireless communication medium, the multimedia broadcast single frequency network subframe comprising at least one symbol carrying a cell-specific reference signal for the first radio access technology and four consecutive symbols carrying the synchronization signal block, the four consecutive symbols carrying the synchronization signal block starting at the first symbol indicated in the downlink control information.

In International Patent Application Publication WO2021/029298A1, there is described a mobile station provided with: a control circuit that, on the basis of information that can identify the disposition of a first reference signal in a first system, determines the disposition of a second reference signal in a second system; and a receiving circuit that receives the second reference signal on the basis of the determined disposition.

In "Discussions on Rel-16 TEI", 3GPP TSG RAN WG1 #100-e e-Meeting, R1-2000895, from Samsung, KDDI, Nokia, Nokia Shanghai Bell, there is described a discussion on DSS CRS rate matching.

SUMMARY

The present disclosure provides an apparatus and a communication system including the same, which provide operation methods for minimizing overlap of resources allocated to synchronization signal blocks (SSBs)s of a New Radio (NR) network and resources allocated to cell reference signals (CRSs) of a Long-Term Evolution (LTE) network.

According to an aspect of the present disclosure, there is provided a communication system including: a base station configured to support dynamic spectrum sharing (DSS) between a first network and a second network; and a user equipment configured to communicate with the base station based on the first network as defined by independent claim 1.

According to another aspect of the present disclosure, there is provided an apparatus configured to support DSS between an NR network and an LTE network, the apparatus including: a plurality of radio frequency (RF) transceivers; a processing circuit configured to process signals received via the plurality of RF transceivers or signals to be transmitted via the plurality of RF transceivers; and a controller as defined by independent claim 8.

According to another aspect of the present disclosure, there is provided a user equipment configured to perform an NR network-based communication with a base station supporting an NR network and an LTE network, the user equipment including: at least one RF transceiver; a processing circuit configured to process signals received via the at least one RF transceiver or signals to be transmitted via the at least one RF transceiver; and a controller configured to control receiving, from the base station, using the at least one RF transceiver and the processing circuit, a channel in which overlap between resources allocated with a plurality of SSBs of the NR network and resources allocated with a reference signal of the LTE network is minimized based on a time offset and information indicating the time offset.

According to another aspect of the present disclosure, there is provided a method for wireless communications, including: receiving asynchronous operation information from a base station, the asynchronous operation information including at least a time offset between resources of a first network and resources of a second network; determining locations of a plurality of synchronization signals associated with the first network based on the asynchronous operation information; detecting the plurality of synchronization signals based on the determined locations; and rate matching a reference signal associated with the second network based on the asynchronous operation information.

At least some of the above and other features of the invention are set out in the claims.

BRIEF DESCRIPTION OF THE DRAWINGS

Embodiments of the present disclosure will be more clearly understood from the following detailed description taken in conjunction with the accompanying drawings in which:

FIG. 1 is a block diagram illustrating a communications system according to one or more aspects of the present disclosure;

FIG. 2 is a block diagram illustrating an implementation of a base station according to one or more aspects of the present disclosure;

FIG. 3 is a block diagram illustrating an implementation of a user equipment according to one or more aspects of the present disclosure;

FIG. 4A is a diagram illustrating a basic structure of a time-frequency domain that is a radio resource domain in a communications system according to one or more aspects of the present disclosure, and FIG. 4B is a diagram illustrating a slot structure in a wireless system according to one or more aspects of the present disclosure;

FIG. 5 is a diagram for explaining a plurality of synchronization signal blocks of an NR network according to one or more aspects of the present disclosure;

FIGS. 6A and 6B are diagrams illustrating overlapped time-frequency domains in dynamic spectrum sharing (DSS) between a New Radio (NR) network and a Long-Term Evolution (LTE) network according to one or more aspects of the present disclosure;

FIG. 7 is a flowchart illustrating a method for wireless communications, which may include a base station and a user equipment, according to one or more aspects of the present disclosure;

FIGS. 8A and 8B are diagrams for explaining one or more aspects of the present disclosure;

FIG. 9 is a flowchart illustrating a method for wireless communications, according to one or more aspects of the present disclosure;

FIG. 10 is a flowchart for describing example operation S250 of FIG. 9 with additional detail;

FIG. 11 is a diagram for explaining a method of operating a base station, according to one or more aspects of the present disclosure;

FIGS. 12A and 12B are diagrams for explaining one or more aspects of the present disclosure;

FIG. 13 is a flowchart illustrating a method for wireless communications, according to one or more aspects of the present disclosure;

FIGS. 14A and 14B are diagrams for explaining one or more aspects of the present disclosure;

FIG. 15 is a flowchart illustrating a method for wireless communications, according to one or more aspects of the present disclosure;

FIG. 16 is a block diagram illustrating an electronic apparatus according to one or more aspects of the present disclosure; and

FIG. 17 is a conceptual diagram showing an example Internet of things (IoT) network system to which one or more aspects of the present disclosure may be applied.

DETAILED DESCRIPTION OF THE EMBODIMENTS

Communications systems (e.g., wireless communications systems) are deployed to provide various communication services such as data services, video services, audio services, messaging services, telecommunication services, broadcast services, etc. Communications systems may employ various technologies according to certain protocols to support communications between devices (e.g., to make communications compatible between various devices, to share available system resources efficiently, etc.).

For instance, dynamic spectrum sharing (DSS) may be utilized by Long-Term Evolution (LTE) systems and New Radio (NR) systems for more efficient co-existing network operations in a same spectrum. In some aspects, DSS techniques may be implemented to realize LTE and NR co-existence in lower frequency operation. To realize DSS features for LTE+NR coexistence, various criteria and functional changes may be implemented, for example, such as uplink spectrum sharing, downlink spectrum sharing, etc. In some aspects (e.g., since both LTE and NR may operate as Orthogonal Frequency-Division Multiplexing (OFDM) based systems), orthogonality between LTE carriers and NR carriers for communications should be maintained to avoid interference between the LTE and NR channels.

For example, as a cell reference signal (CRS) of a LTE network may be configured or implemented as an always-on signal, an LTE user equipment may expect that the CRS is always transmitted from an LTE base station (e.g., always transmitted in accordance with an established CRS allocation or an established CRS configuration in the LTE network). However, when a synchronization signal block (SSB) of a NR network overlaps with the resource to which the CRS of the LTE network is allocated, challenges arise in order to avoid the problem of collision between the SSBs of the NR network and the CRS of the LTE network. As such, inefficiencies (e.g., inefficiencies in resource utilization, communications throughput, etc.) may arise as SSBs of NR networks that overlap with resources to which the CRS of a LTE network is allocated may not be used.

As described in more detail herein, one or more aspects of the present disclosure may be implemented to more efficiently reduce and manage overlap of NR SSBs and LTE CRSs (e.g., via implementation of asynchronous operation methods, via minimizing overlap between resources allocated to SSBs and resources allocated to CRSs based on time offsets between NR resources and LTE resources, etc., as described in more detail herein). For instance, a base station may determine an asynchronous operation method (e.g., a method for offsetting NR resources and LTE resources) in order to align SSBs in NR with multicast-broadcast single frequency network (MBSFN) subframes, to offset SSB allocated resources in NR to not overlap with CRS allocated resources in LTE, etc. As such, the base station may effectively transmit more valid SSBs to a UE (e.g., as less SSBs may overlap with resources rate matched by a UE for CRS). Such may result in improved communication systems, for example, by improving resource utilization, improving NR synchronization operations, etc.

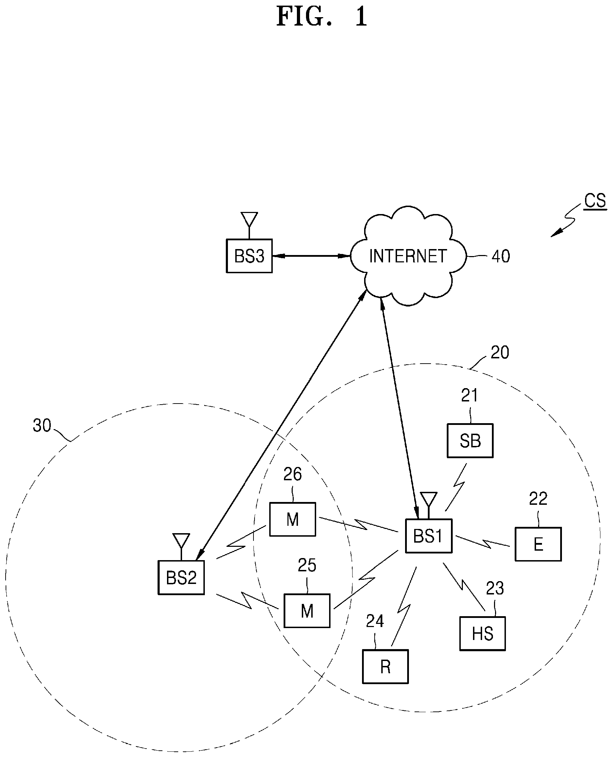

FIG. 1 is a block diagram illustrating a communication system CS according to one or more aspects of the present disclosure.

Hereinafter, first to third base stations BS1, BS2, and BS3 may generally refer to fixed stations that communicate with user equipment and/or other base stations, and may exchange data and control information by communicating with user equipment and/or other base stations. For example, each of the first to third base stations BS1, BS2, and BS3 may be referred to as Node B, evolved-Node B (eNB), next generation node B (gNB), a sector, a site, a base transceiver system (BTS), an access point (AP), a relay node, a remote radio head (RRH), a radio unit (RU), a small cell, an apparatus, and the like. In some aspects, the base station or cell may be interpreted as a comprehensive meaning indicating some areas or functions covered by a base station controller (BSC) in code division multiple access (CDMA), a Node-B in Wideband CDMA (WCDMA), an eNB in LTE, a gNB or sector (site) in 5G, etc., and may cover a variety of coverage areas such as a megacell, a macrocell, a microcell, a picocell, a femtocell and a relay node, an RRH, an RU, and a small cell communication range.

User equipments 21 to 26 may be fixed or mobile, and may refer to any equipments capable of transmitting and receiving data and/or control information by communicating with the base stations BS1, BS2, and BS3. For example, the user equipments 21 to 26 may be referred to as terminals, terminal equipments, mobile stations (MSs), mobile terminals (MTs), user terminals (UTs), subscriber stations (SSs), wireless communication devices, wireless devices, handheld devices, and the like.

Referring to FIG. 1, the communication system CS may include the first to third base stations BS1, BS2, and BS3. The third base station BS3 may communicate with the first and second base stations BS1 and BS2. In addition, the third base station BS3 may communicate with at least one network 40, such as the Internet, an Internet Protocol (IP) network, a proprietary IP network, or another data network.

The first base station BS1 may provide wireless broadband access to the user equipments 21 to 26 within a coverage area 20 of the first base station BS1. The user equipments 21 to 26 may include, for example, a user equipment 21 that may be located in a small business SB, a user equipment 22 that may be located in an enterprise E, a user equipment 23 that may be located in a Wifi hotspot HS, a user equipment 24 that may be located in a residence R, and user equipments 25 and 26 that may be mobile devices M such as cellular phones, wireless laptops, wireless personal digital assistants (PDAs), and the like. The second base station BS2 may provide wireless broadband access to the user equipments 25 and 26 within a coverage area 30 of the second base station BS2. In some embodiments, the first to third base stations BS1, BS2, and BS3 may communicate with each other or with the user equipments 21 to 26 using New Radio (NR), Long Term Evolution (LTE), Long Term Evolution-Advanced (LTE-A), WiMAX, WiFi, CDMA, Global System for Mobile Communications (GSM), a wireless local area network (WLAN), or any other wireless communication technology.

As an example, the first base station BS1 may support NR network-based communication, and the second base station BS2 may support LTE network-based communication. As another example, the first base station BS1 may support both NR network-based communication and LTE network-based communication.

In some examples, it may be assumed that the first base station BS1 may support DSS between the NR network and the LTE network, and the user equipment 26 performs NR network-based communication with the first base station BS1 through a frequency band overlapping the frequency band of the LTE network. That is, some examples described herein may assume that the user equipment 26 performs NR network-based communication from the first base station BS1 through a frequency range 1 (FR1) (e.g., from a FR1 among the FR1 and a frequency range 2 (FR2) specified in a standard or protocol for wireless communications, such as in a 3rd generation partnership project (3GPP) standard specification). Such assumptions may be provided to help the understanding of one or more aspects of the present disclosure, but the applicability of techniques described herein are not limited thereto.

For instance, some LTE subframes may include CRSs mapped to resource elements (e.g., of a time-frequency grid), and a LTE user equipment (e.g., user equipment 26) may use CRS for channel estimation (e.g., to maintain time and frequency synchronization with a LTE base station). As such, in some scenarios (e.g., when a NR network is using, for example, 30 kHz subcarrier spacing), rate matching around the LTE CRS may be employed to enable the NR network to use these subframes. For example, rate matching techniques may be implemented to determine or select a certain set of bits (e.g., encoded bits) for transmission through processes such as bit puncturing (e.g., removal of certain encoded bits), bit repetition (e.g., repetition of certain encoded bits), etc. For instance, to avoid LTE CRSs, a NR network (e.g., NR base stations, NR user equipment) may be configured with the LTE CRS frequency information (e.g., to calculate the LTE CRS positions as reserved resources) and the NR SSBs may be rate matched around those reserved resources. In some examples, to avoid NR SSBs, a LTE network (e.g., LTE base stations, LTE user equipment) may be configured with the NR SSB frequency information (e.g., to calculate the NR SSB positions as reserved resources) and the LTE CRSs may be rate matched around those reserved resources.

However, in other scenarios (e.g., when a NR network is using, for example, 15 kHz subcarrier spacing), one or more SSBs may not be able to be rate matched around the LTE CRS (e.g., and may be dropped or may be not able to be transmitted by a NR base station). As described in more detail herein, one or more aspects of the present disclosure may be implemented to more efficiently reduce and manage overlap of NR SSBs and LTE CRSs (e.g., via implementation of asynchronous operation methods, via minimizing overlap between resources allocated to SSBs and resources allocated to CRSs based on time offsets between NR resources and LTE resources, etc., as described in more detail herein).

In an example embodiment, the first base station BS1 may determine an asynchronous operation method between the NR network and the LTE network based on the first pattern type for a plurality of SSBs corresponding to the NR network and the second pattern type for the reference signal corresponding to the LTE network. In some aspects, a synchronous operation method may refer to, or may include, allocating resources by aligning resource boundaries (e.g., radio frame boundaries, time resource boundaries, etc.) between the NR network and the LTE network. In some aspects, an asynchronous operation method may refer to, or may include, allocating resources without aligning resource boundaries (e.g., radio frame boundaries) between the NR network and the LTE network. In some aspects, example embodiments for determining the asynchronous operation method (e.g., considering a plurality of SSBs of the NR network and the reference signal of the LTE network) may be described in detail herein, but the present disclosure is not limited thereto. As one example, the asynchronous operation method may be determined using an arbitrary signal of the NR network and an arbitrary signal of the LTE network by analogy, without departing from the scope of the present disclosure.

In some embodiments, when only the NR network-based communication is supported, the first base station BS1 may receive information about the second pattern type for the reference signal corresponding to the LTE network from the second base station BS2. In some embodiments, when both LTE network-based communication and NR network-based communication are supported, the first base station BS1 may itself set or generate information about the second pattern type for the reference signal corresponding to the LTE network.

In some embodiments, in order to minimize overlapping of resources allocated to a plurality of SSBs of the NR network with resources allocated to reference signals of the LTE network, the first base station BS1 may determine a degree of non-alignment of the radio frame boundary between the NR network and the LTE network. In some aspects, the degree of non-alignment may be referred to as a resource offset, a time offset, a frame offset, a subframe offset, a symbol offset, a boundary offset, etc. For instance, a time offset may refer to, or may include, a time interval between a radio frame boundary of an LTE network and a radio frame boundary of an NR network corresponding to the radio frame boundary of the LTE network. In an example embodiment, the time offset may include at least one of a subframe offset of a subframe unit and a symbol offset of a symbol unit.

In some embodiments, when a plurality of SSBs are provided to the user equipment 26 through an 'FR1' (e.g., an 'FR1' frequency range, an 'FR1' operation mode, etc.), the user equipment 26 may obtain transmission configuration indication (TCI) states from the plurality of SSBs. On the other hand, when the plurality of SSBs are provided to the user equipment 26 through an 'FR2' (e.g., an 'FR2' frequency range, an 'FR2' operation mode, etc.), the user equipment 26 may select a transmission/reception beam for communication with the first base station BS1 using the plurality of SSBs. In an example embodiment, the reference signal of the LTE network may be a CRS.

In some embodiments, the first base station BS1 may perform resource allocation for signals of the NR network based on the determined asynchronous operation method, and the first base station BS1 may transmit signals of the NR network to the user equipment 26 through the allocated resources. In some embodiments, the first base station BS1 may perform resource allocation for an NR physical downlink shared channel (PDSCH) based on the determined asynchronous operation method, and the first base station BS1 may transmit the NR PDSCH to the user equipment 26 through the allocated resources. Further, the first base station BS1 may transmit information indicating the determined asynchronous operation method to the user equipment 26.

In some embodiments, the user equipment 26 may detect a plurality of SSBs included in the signals of the NR network based on the information indicating the determined asynchronous operation method. In addition, when performing decoding on an NR PDSCH based on the information indicating the determined asynchronous operation method (e.g., as described in more detail herein), the user equipment 26 may perform rate matching with respect to a reference signal of the LTE network. For instance, the user equipment 26 may recognize (e.g., from the asynchronous operation method information) the location of the resources allocated to the reference signal of the LTE network based on the resources allocated to the signals of the NR network. Moreover, the user equipment 26 may perform rate matching on the reference signal of the LTE network based on the recognized location (e.g., based on the recognized location of the resources allocated to the reference signal).

The first base station BS1 according to one or more aspects of the present disclosure may determine an asynchronous operation method between the NR network and the LTE network in the DSS, and the first base station BS1 may maximize the number of SSBs available on the user equipment 26 side by performing NR network-based communication with the user equipment 26 based on the determined asynchronous operation method. In addition, the second base station BS2 may operate up to four CRS-related antenna ports. As such, a data stream of rank 3 or higher may be transmitted by the second base station BS2 (e.g., thereby improving data throughput). The user equipment 26 effectively may receive the SSBs from the first base station BS1 (e.g., which may be used by the user equipment 26, for example, for communication connection, etc.), thereby improving communication performance (e.g., thereby improving system synchronization operations, connection operations, etc., via the efficient and effective communication of SSBs).

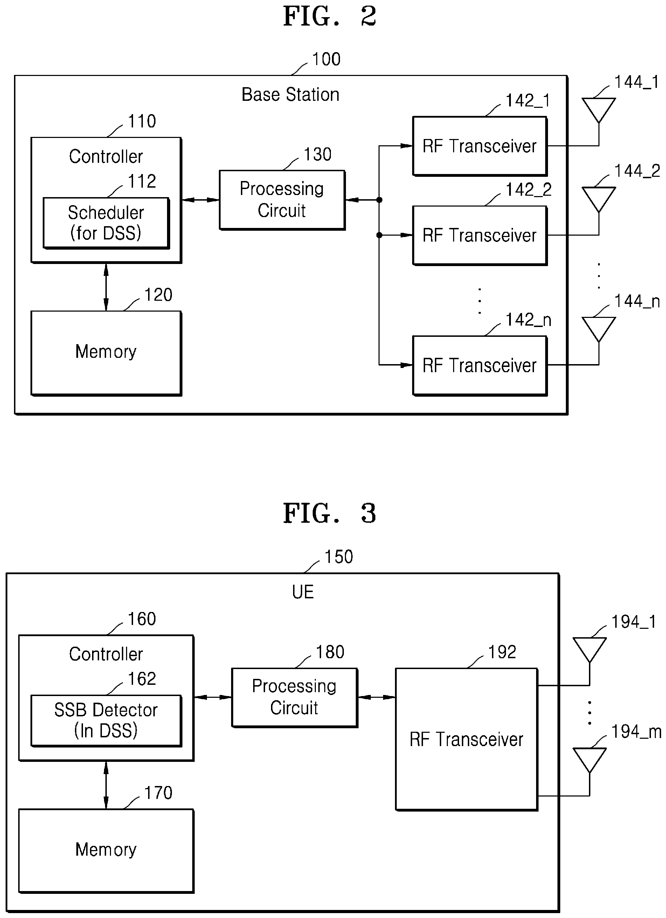

FIG. 2 is a block diagram illustrating an implementation of a base station 100, according to one or more aspects of the present disclosure. The implementation of the base station 100 is only an example embodiment, and inventive aspects of the present disclosure are not limited thereto. Moreover, the implementation of the base station 100 may be applied to the first base station BS1 of FIG. 1.

Referring to FIG. 2, the base station 100 may include a controller 110, a memory 120, a processing circuit 130, a plurality of RF transceivers 142_1 to 142_n, and a plurality of antennas 144_1 to 144_n. The RF transceivers 142_1 to 142_n may respectively receive RF signals transmitted by the user equipments in the network from the antennas 144_1 to 144_n. The RF transceivers 142_1 to 142_n may frequency down-convert the received RF signals to generate intermediate frequency (IF) or baseband signals. The processing circuit 130 may generate data signals by filtering, decoding, and/or digitizing the IF or baseband signals. The controller 110 may further process the data signals.

A transceiver (e.g., a RF transceiver) may communicate bi-directionally, via antennas, wired, or wireless links as described above. For example, the transceiver may represent a wireless transceiver and may communicate bi-directionally with another wireless transceiver. The transceiver may also include or be connected to a modem to modulate the packets and provide the modulated packets to for transmission, and to demodulate received packets. In some examples, transceiver may be tuned to operate at specified frequencies. For example, a modem can configure the transceiver to operate at a specified frequency and power level based on the communication protocol used by the modem.

Furthermore, the processing circuit 130 may receive data signals from the controller 110. The processing circuit 130 may encode, multiplex, and/or perform analog conversion on the received data signals. The RF transceivers 142_1 to 142_n may frequency up-convert the IF or baseband signals output from the processing circuit 130 to transmit RF signals through the antennas 144_1 to 144_n.

The controller 110, according to example embodiments, may perform an overall control operation of communication of the base station 100 for NR network-based communication, and may include a scheduler 112 for determining an asynchronous operation method between the NR network and the LTE network in the DSS.

In some embodiments, the scheduler 112 may set a time offset between resources, to which first signals corresponding to an NR network including a plurality of SBBs are allocated, and resources, to which second signals corresponding to an LTE network including a reference signal are allocated. In some aspects, the time offset may be set based on a first pattern type for the plurality of SSBs of the NR network and a second pattern type for the reference signal corresponding to the LTE network.

In some embodiments, the first pattern type may include at least one of a subcarrier spacing in the NR network, a number of SSBs during one SSB burst set period, and a frequency domain (e.g., a frequency range, a carrier frequency, etc.) of resources to which SSBs are allocated. In some embodiments, the second pattern type may include at least one of a number of antenna ports in the LTE network and a configuration related to a MBSFN subframe. In some embodiments, the controller 110 may store information, for example, such as at least one of information indicating the set time offset, the first pattern type, and the second pattern type in the memory 120.

In some embodiments, the scheduler 112 may change the resources of the first signals of the NR network (e.g., around a time axis) based on the radio frame boundary of the LTE network, depending on the set time offset. As an example, the scheduler 112 may change the resources, to which the first signals are allocated, such that at least one subframe allocated as the MBSFN subframe of the second network overlaps the plurality of SSBs based on the set time offset. As another example, the scheduler 112 may change the resources allocated to the first signals such that a plurality of SSBs do not overlap with the resources allocated to the reference signal of the LTE network (e.g., based on the set time offset).

In some embodiments, the scheduler 112 may transmit information indicating the set time offset in advance to the user equipment receiving the first signals of the NR network by using the processing circuit 130, the plurality of RF transceivers 142_1 to 142_n, and the plurality of antennas 144_1 to 144_n.

In some aspects, the controller 110 may execute a program and/or a process stored in the memory 120 to perform an overall communication control operation of the base station 100. In some embodiments, the scheduler 112 may be stored in the memory 120 as program code, and the controller 110 may access the memory 120 and execute the stored program code to perform the operation of the scheduler 112.

FIG. 3 is a block diagram illustrating an implementation of a user equipment 150 according to one or more aspects of the present disclosure. The implementation of the user equipment 150 is only an example embodiment, inventive aspects of the present disclosure are not limited thereto. In some aspects, the implementation of the user equipment 150 may be applied to the user equipment 26 of FIG. 1.

Referring to FIG. 3, the user equipment 150 may include a controller 160, a memory 170, a processing circuit 180, an RF transceiver 192, and a plurality of antennas 194_1 to 194_m.

The RF transceiver 192 may receive RF signals transmitted by the base station through the antennas 194_1 to 194_m. The RF transceiver 192 may down-convert the received RF signals to generate IF or baseband signals. The processing circuit 180 may generate data signals by filtering, decoding, and/or digitizing IF or baseband signals. The controller 160 may further process the data signals.

In addition, the processing circuit 180 may receive the data signals from the controller 160. The processing circuit 180 may encode, multiplex, and/or perform analog conversion on the received data signals. The RF transceiver 192 may frequency up-convert the IF or baseband signals output from the processing circuit 180 to transmit the RF signals through the antennas 194_1 to 194_n.

The controller 160, according to an example embodiment, may perform an overall communication control operation for NR network-based communication, and may include an SSB detector 162 for detecting an SSB in the DSS.

In some embodiments, the user equipment 150 may receive, from the base station, a channel (e.g., a PDSCH) in which overlap between resources allocated with a plurality of SSBs of the NR network and resources allocated with a reference signal of the LTE network is minimized based on the time offset and information indicating the time offset.

In some embodiments, the user equipment 150 may receive the information indicating the time offset before the channel, and store the information in the memory 170.

In some embodiments, the SSB detector 162 may recognize the locations of resources allocated to the plurality of SSBs by using the time offset, and the SSB detector 162 may detect the plurality of SSBs from the recognized resources. In some aspects, detecting the SSB may include obtaining information necessary for communication connection, etc. included in the SSB through a processing operation (e.g., such as decoding).

In some embodiments, the controller 160 may recognize the locations of the resources allocated to the reference signal of the LTE network by using the time offset, and the controller 160 may perform rate matching on the recognized resources.

In some aspects, the controller 160 may execute a program and/or a process stored in the memory 170 to perform an overall communication control operation of the user equipment 150. In some embodiments, the SSB detector 162 may be stored in the memory 170 as program code, and the controller 160 may access the memory 170 to execute the stored program code, whereby the operation of the SSB detector 162 may be performed.

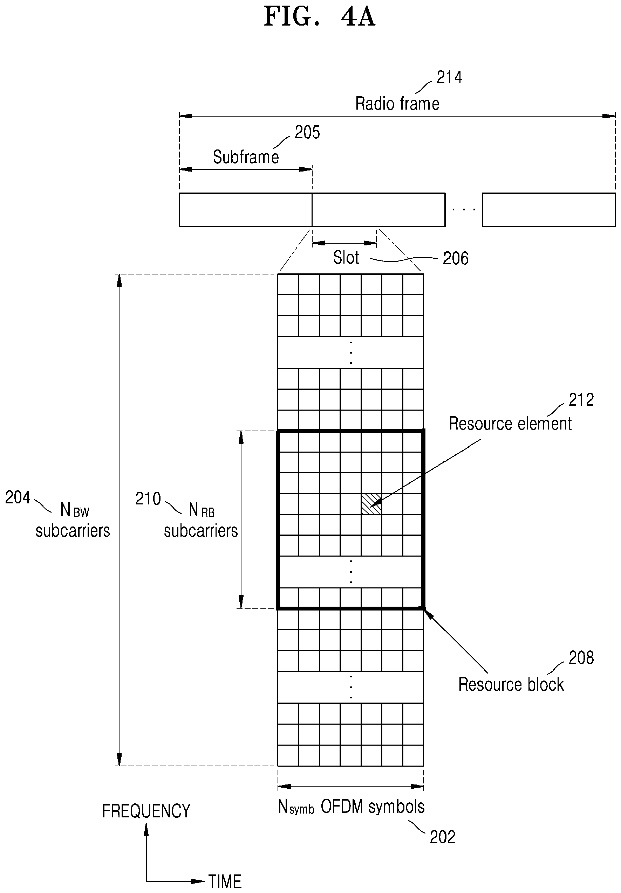

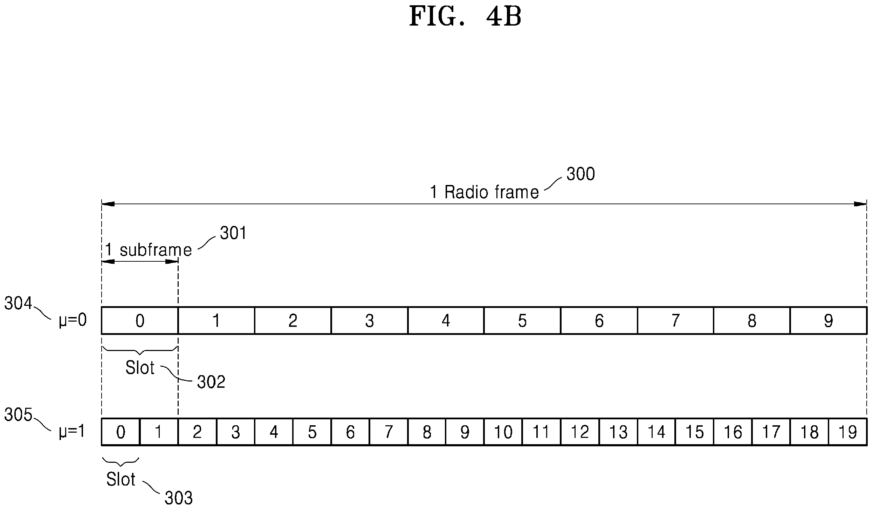

FIG. 4A is a diagram illustrating a basic structure of a time-frequency domain that is a radio resource domain in a communication system according to one or more aspects of the present disclosure, and FIG. 4B is a diagram illustrating a slot structure in a wireless system according to one or more aspects of the present disclosure.

Referring to FIG. 4A, the horizontal axis may represent a time domain, and the vertical axis may represent a frequency domain. The minimum transmission unit in the time domain is an orthogonal frequency division multiplexing (OFDM) symbol, and $N_{symb}$ 202 OFDM symbols may be gathered to configure one slot 206. Two slots may be gathered to configure one subframe 205. For example, the length of the slot 206 may be 0.5 ms, and the length of the subframe 205 may be 1.0 ms. However, this is an example embodiment, and the length of the slot 206 may be variable based on the configuration of the slot 206. In some aspects, the subframe 205 may be based on an LTE network and, in a 5G network, a time-frequency domain may be defined around the slot 206. In addition, a radio frame 214 may be a time domain unit consisting of 10 subframes 205.

In some examples, the minimum transmission unit in the frequency domain may be referred to as a subcarrier, and the bandwidth of the entire system transmission bandwidth may be composed of a total of $N_{BW}$ subcarriers 204. A basic unit of a resource in the time-frequency domain may be referred to as a resource element (RE) 212 and may be represented by an OFDM symbol index and a subcarrier index. A resource block (RB) 208 may be defined as $N_{symb}$ 202 consecutive OFDM symbols in the time domain and $N_{RB}$ 210 consecutive subcarriers in the frequency domain. Thus, one RB 208 may be composed of ($N_{SYMB}$ * $N_{RB}$) REs 212. An RB pair is a unit of concatenating two RBs on the time axis, and may consist of ($N_{symb}$ * $2N_{RB}$) REs 212.

In some aspects, the SSBs of the NR network and the reference signal of the LTE network may be allocated to resources in the time-frequency domain as shown in FIG. 4A, and according to example embodiments of the present disclosure, the base station may minimize overlap between the SSBs and the reference signal. In some embodiments, overlap between signals may generally refer to overlap between resources (e.g., time resources, frequency resources, etc.), to which signals are allocated. As a result, the base station may transmit a large number of valid SSBs to the user equipment (e.g., an increased number of SSBs that may be effectively received by the user equipment, due to minimization of overlap between the SSBs and the reference signal, according to one or more aspects of techniques described herein), and the user equipment may thus perform effective communication using the SSBs.

Referring further to FIG. 4B, one radio frame 300 may be defined as 10 ms, a subframe 301 may be defined as 1 ms, and the radio frame 300 may include a total of 10 subframes 301. One slot 302 and one slot 303 may be defined as 14 OFDM symbols (i.e., the number of symbols per one slot $N_{symb}^{slot} = 14$). One subframe 301 may consist of one or a plurality of slots 302 and 303, and the number of slots 302 and 303 per one subframe 301 may vary depending on a set value $\mu$ for subcarrier spacing (or subcarrier spacing) and the number of symbols included in the slots 302 and 303. In FIG. 4B, a case 304 of $\mu = 0$ and a case 305 of $\mu = 1$ are shown as the subcarrier spacing setting values. When $\mu = 0$ 304 as a subcarrier spacing setting value, one subframe 301 includes one slot 302, and when $\mu = 1$ 305 as the subcarrier spacing setting value, one subframe 301 may include two slots 303.

As described herein, the number of slots per one subframe may vary depending on the set value $\mu$ for subcarrier spacing, and accordingly, the number of slots per one frame may vary. The number of slots per one subframe, $N_{slot}^{subframe,\mu}$, and the number of slots per frame, $N_{slot}^{frame,\mu}$, based on the set value $\mu$ for each subcarrier spacing may be defined as shown in Table 1.

**Table 1:**

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Also, in some embodiments, the number of slots per one subframe may vary depending on the number of symbols included in one slot.

In some embodiments, the base station may set the time offset between the NR network and the LTE network considering the number of slots per subframe and/or the subcarrier spacing. For example, the base station may set a symbol offset in units of symbols, a subframe offset in units of subframes, or both, based on the number of slots per subframe or subcarrier spacing.

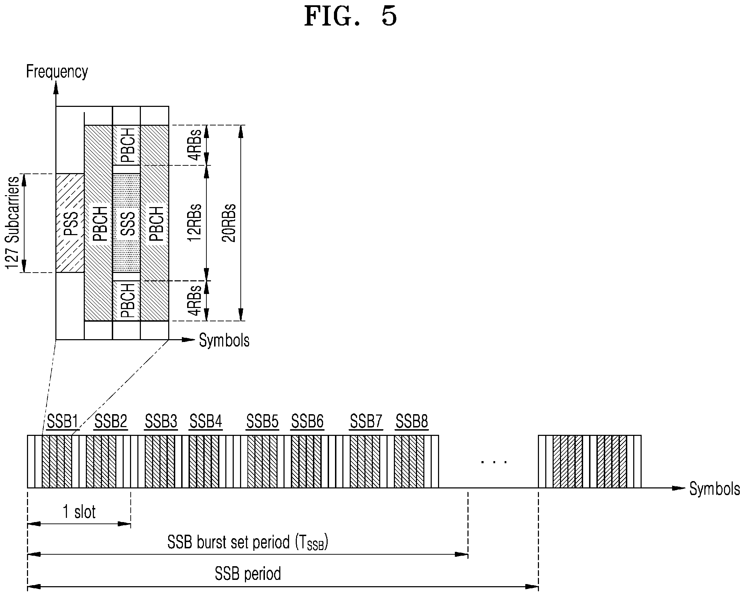

FIG. 5 is a diagram for explaining aspects of a plurality of SSBs of an NR network.

Referring to FIG. 5, the first SSB SSB1 may include a primary synchronization signal (PSS), a secondary synchronization signal (SSS), and a physical broadcast channel (PBCH). As an example, the first SSB SSB1 may include 4 symbols, and the PSS, the SSS, and the PBCH may be located in locations corresponding to predetermined RBs in the frequency axis direction. In addition, one RB may include 12 consecutive subcarriers. For example, the PSS corresponding to the first symbol may be transmitted to the user equipment through 127 subcarriers. The configuration of the first SSB SSB1 may also be applied to the configuration of the second to eighth SSBs SSB2 to SSB8.

For example, two SSBs may be arranged in one slot, and the base station may transmit the SSB burst set including the plurality of SSBs SSB1 to SSB8 to the user equipment during a predetermined SSB burst set period $T_{SSB}$. As an example, assuming that NR to which subcarrier spacing of 15 kHz is applied in a communication system, the base station may transmit eight SSBs SSB1 to SSB8 to the user equipment during the SSB burst set period $T_{SSB}$. In this case, the length of one slot may be 1 ms, and the SSB burst set period $T_{SSB}$ may be 20 ms. However, this is only an example embodiment, and inventive aspects of the present disclosure are not limited thereto. That is, the number of SSBs included in the SSB burst set, the number of SSBs, the SSB burst set period $T_{SSB}$, and the length of one slot may vary depending on a size of subcarrier spacing, an SSB period set by the base station, a time period allocated for cell search, and the like. One or more aspects of the techniques described herein may generally be applied to any of such scenarios by analogy, without departing from the scope of the present disclosure.

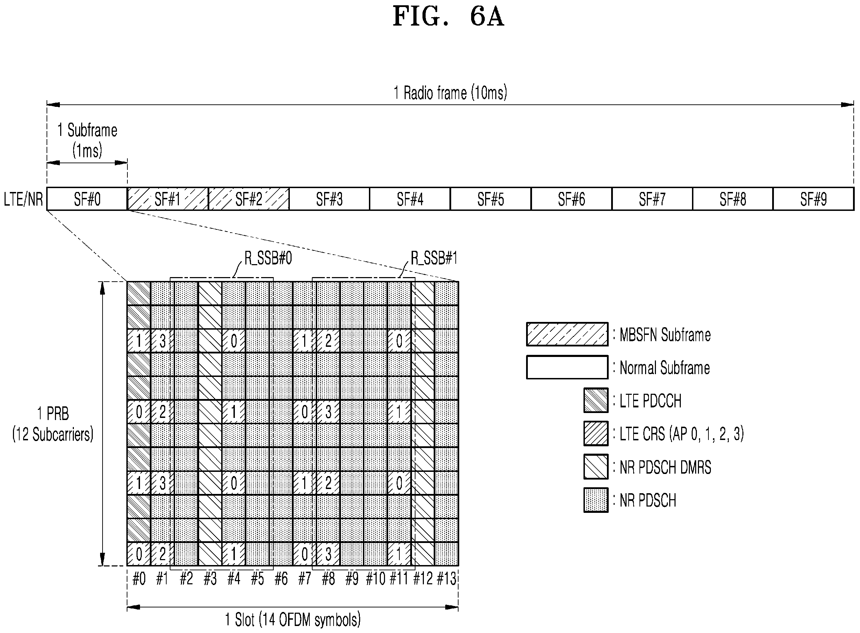

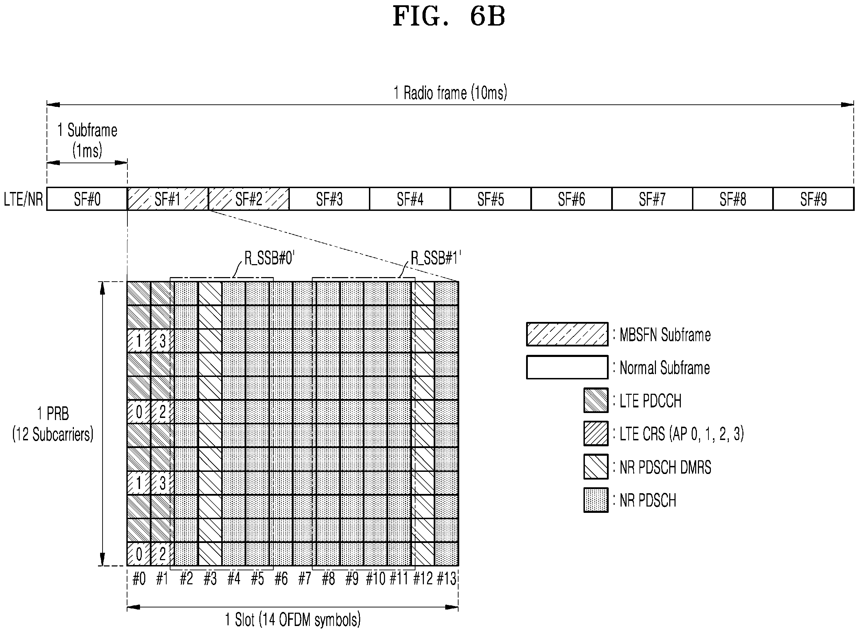

FIGS. 6A and 6B are diagrams illustrating overlapped time-frequency domains in DSS between an NR network and an LTE network. In FIGS. 6A and 6B, it may be assumed that a radio frame boundary of the NR network overlaps with a radio frame boundary of the LTE network so that the radio frame boundary of the NR network is aligned with the radio frame boundary of the LTE network. However, the example of the subframe shown in FIGS. 6A and 6B is only an example embodiment, and the configuration of subframes may vary depending on parameters, for example, such as subcarrier spacing of the NR network. One or more aspects of the techniques described herein may be applied to the configuration of other subframes by analogy, without departing from the scope of the present disclosure.

Referring to FIG. 6A, one radio frame may include first to tenth subframes SF#0 to SF#9. As an example, the second and third subframes SF#1 and SF#2 may be configured as MBSFN subframes, and the remaining subframes SF#0 and SF#3 to SF#9 may be normal subframes.

When describing the first subframe SF#0 in detail, the first subframe SF#0 may include a first slot. The first slot may include first to fourteenth symbols #0 to #13. One physical resource block (PRB) may include resources corresponding to a combination of 12 subcarriers and 14 OFDM symbols #0 to #13.

In some aspects, an LTE physical downlink control channel (PDCCH), an LTE CRS, an NR PDSCH demodulate reference signal (DMRS), and an NR PDSCH may be allocated to one PRB. In some aspects, the pattern of the LTE CRS may vary depending on the number of antenna ports AP0, AP1, AP2, and AP3 in the LTE network. In some aspects, the LTE CRS may be referred to as the CRS of the LTE network, the reference signal of the LTE network, etc. For example, when the number of antenna ports AP0 is one, the CRS may be allocated to resources 0 corresponding to the first, fifth, eighth, and twelfth symbols #0, #4, #7, and #11, when the number of antenna ports AP1 is two, the CRS may be allocated to resources 1 corresponding to the first, fifth, eighth, and twelfth symbols #0, #4, #7, and #11, when the number of antenna ports AP2 is three, the CRS may be allocated to resources 2 corresponding to the second and ninth symbols #1 and #8, and when the number of antenna ports AP3 is 4, the CRS may be allocated to the resources 3 corresponding to the second and ninth symbols #1 and #8.

For example, the first SSB of the NR network may be allocated to the first SSB area R_SSB#0, and the first SSB region R_SSB#0 may correspond to the third to sixth symbols #2 to #5. In addition, the second SSB of the NR network may be allocated to a second SSB area R_SSB#1, and the second SSB area R_SSB#1 may be allocated to the ninth to twelfth symbols #8 to #11.

Because the first SSB overlaps the CRS when the number of antenna ports AP0 and AP1 is 1 or 2, it may be difficult for the base station to use the first SSB. In addition, because the second SSB overlaps the CRS when the number of antenna ports AP0, AP1, AP2, and AP3 is 1 or 2 or 3 or 4, it may be difficult for the base station to use the second SSB.

As described herein, because it is difficult for the base station to use the SSB overlapping the CRS of the LTE network for communication with the user equipment, it may be difficult to operate a large number of SSBs.

FIG. 6B shows the configuration of the second subframe #SF1 set as the MBSFN subframe. Referring further to FIG. 6B, the LTE PDCCH, the LTE CRS, the NR PDSCH DMRS, and the NR PDSCH may be allocated to one PRB of the second subframe #SF1. For example, the LTE CRS pattern may vary depending on the number of antenna ports AP0, AP1, AP2, and AP3 in the LTE network, and the LTE CRS pattern of the second subframe #SF1 may be different from the LTE CRS pattern of the first subframe #SF0 of FIG. 6A. For example, when the number of antenna ports AP0 is one, the CRS may be allocated to resources 0 corresponding to the first symbol #0, when the number of antenna ports AP1 is 2, the CRS may be allocated to the resources 1 corresponding to the first symbol #0, when the number of antenna ports AP2 is 3, the CRS may be allocated to the resources 2 corresponding to the second symbol #1, and when the number of antenna ports AP3 is 4, the CRS may be allocated to the resources 3 corresponding to the second symbol #1. OFDM symbols #0 to #13 shown in FIG. 6B may correspond to the second subframe #SF1, and may be different from OFDM symbols #0 to #13 shown in FIG. 6A.

As an example, the first SSB of the NR network may be allocated to a first SSB area R_SSB#0', and the first SSB area R_SSB#0' may correspond to the third to sixth symbols #2 to #5. In addition, the second SSB of the NR network may be allocated to a second SSB area R_SSB#1', and the second SSB area R_SSB#1' may be allocated to the ninth to twelfth symbols #8 to #11.

On the other hand, because the first and second SSBs do not overlap with the CRS, the base station may provide valid (e.g., receivable) first and second SSBs to the user equipment, and the user equipment may perform an operation such as communication connection by detecting the first and second SSBs.

In some embodiments, the base station may control the plurality of SSBs of the NR network to be located in the MBSFN subframe by performing resource allocation based on the asynchronous operation method between the NR network and the LTE network.

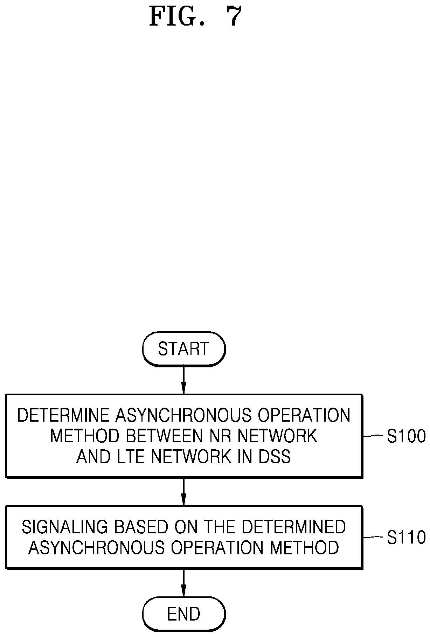

FIG. 7 is a flowchart illustrating a method for wireless communications, according to one or more aspects of the present disclosure. The communication system may include a base station and a user equipment.

Referring to FIG. 7, in operation S100, the base station may determine an asynchronous operation method between an NR network and an LTE network in a DSS. In some embodiments, the base station may set a time offset between the resources, to which the first signals corresponding to an NR network including a plurality of SSBs are allocated, and the resources, to which the second signals corresponding to the LTE network including the reference signal are allocated. As described herein, the base station may set the time offset based on the first pattern type for a plurality of SSBs of an NR network and the second pattern type for a reference signal corresponding to an LTE network.

In operation S110, the base station may perform signaling based on the determined asynchronous operation method with the user equipment. In some embodiments, after the base station performs resource allocation for the first signals (e.g., such that at least one subframe allocated as an MBSFN subframe of the LTE network overlaps with a plurality of SSBs based on the set time offset), the base station may transmit the first signals to the user equipment. In some embodiments, after the base station allocates resources for the first signals such that the resources allocated to the reference signal and the plurality of SSBs do not overlap, based on the set time offset, the base station may transmit the first signals to the user equipment. In some embodiments, the base station may transmit information indicating the determined asynchronous operation method (e.g., information indicating the set time offset) to the user equipment. The user equipment may detect a plurality of SSBs from the first signals based on the information, and the user equipment may communicate with the base station based on the detected SSBs. In addition, the user equipment may perform rate matching on the CRS by recognizing the resource location of the CRS based on the information (e.g., based on the time offset information, based on the information of where SSBs are located/detected, etc.).

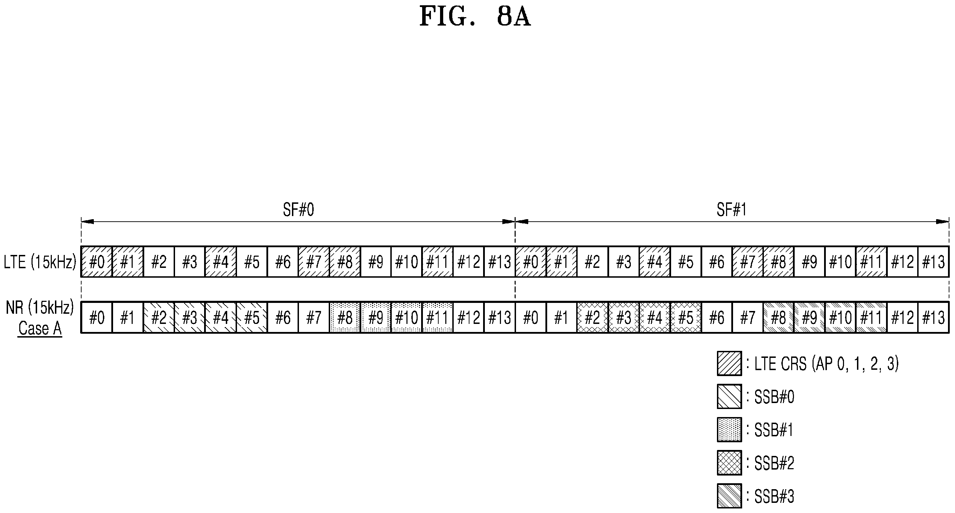

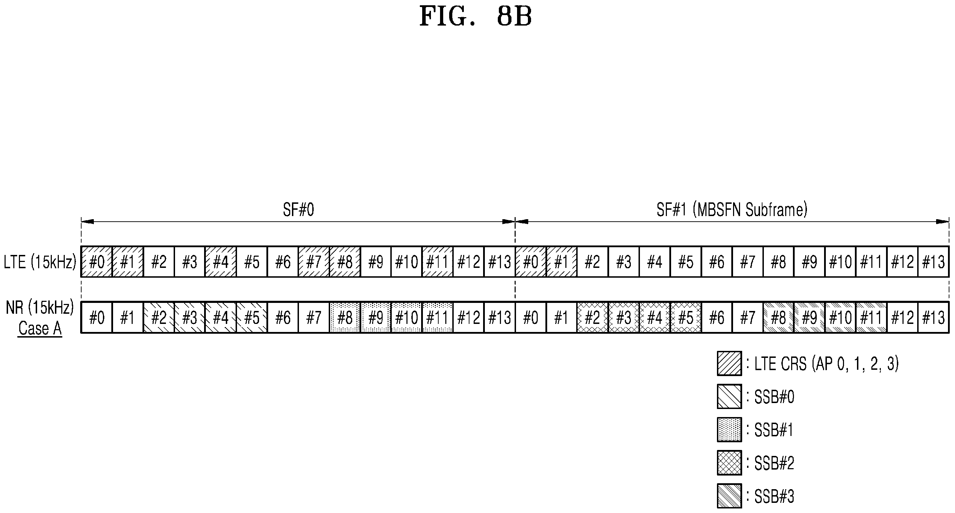

FIGS. 8A and 8B are diagrams for explaining one or more aspects of the present disclosure. FIGS. 8A and 8B show overlapping LTE network resources and NR network resources in DSS, and it is assumed that the subcarrier spacing of the LTE network and the subcarrier spacing of the NR network are 15 kHz, and the pattern of the SSBs of the NR network is 'Case A'. However, this is only an example embodiment, and inventive aspects of the present disclosure are not limited thereto and may be applied to other embodiments.

Referring to FIG. 8A, the first and second subframes SF#0 and SF#1 may include first to fourteenth symbols #0 to #13, respectively. In the first and second subframes SF#0 and SF#1, an LTE CRS may be allocated to the first, second, fifth, eighth, ninth, and twelfth symbols #0, #1, #4, #7, #8, and #11 depending on the number of antenna ports. The first SSB SSB#0 may be allocated to the third to sixth symbols #2 to #5 of the first subframe SF#0, the second SSB SSB#1 may be allocated to the ninth to twelfth symbols #8 to #11 of the first subframe SF#0, the third SSB SSB#2 may be allocated to the third to sixth symbols #2 to #5 of the second subframe SF#1, and the fourth SSB SSB#3 may be allocated to the ninth to twelfth symbols #8 to #11 of the second subframe SF#1.

As shown in FIG. 8A, the first to fourth SSBs SSB#0 to SSB#3 overlap at least one symbol, to which the CRS is assigned, so that it may be difficult for the base station to communicate using the first to fourth SSBs SSB#0 to SSB#3 (e.g., as a user equipment may rate match based on the assigned CRS symbols, which may result in difficulty, or inability, to detect SSBs on such overlapping symbols).

Referring further to FIG. 8B, the second subframe SF#1 may be set as an MBSFN subframe, and accordingly, the LTE CRS may be allocated to only the first and second symbols #0 and #1 in the second subframe SF#1 based on the number of antenna ports. As a result, the third and fourth SSBs SSB#2 and SSB#3 do not overlap the symbols, to which the CRS is assigned, so the base station may perform a communication operation using the (e.g., "valid") third and fourth SSBs SSB#2 and SSB#3.

The base station according to one or more aspects of the present disclosure may minimize the overlap between the SSB and the LTE CRS by determining the asynchronous operation method between the NR network and the LTE network based on the setting of the MBSFN subframe, as described in more detail herein. In FIGS. 8A and 8B, an embodiment of determining the asynchronous operation method considering all patterns of CRS based on the number of antenna ports is shown, but this is only an example embodiment, and the asynchronous operation method may be determined by considering any arbitrary pattern of CRS (e.g., a pattern of CRS in case of the number of one antenna port).

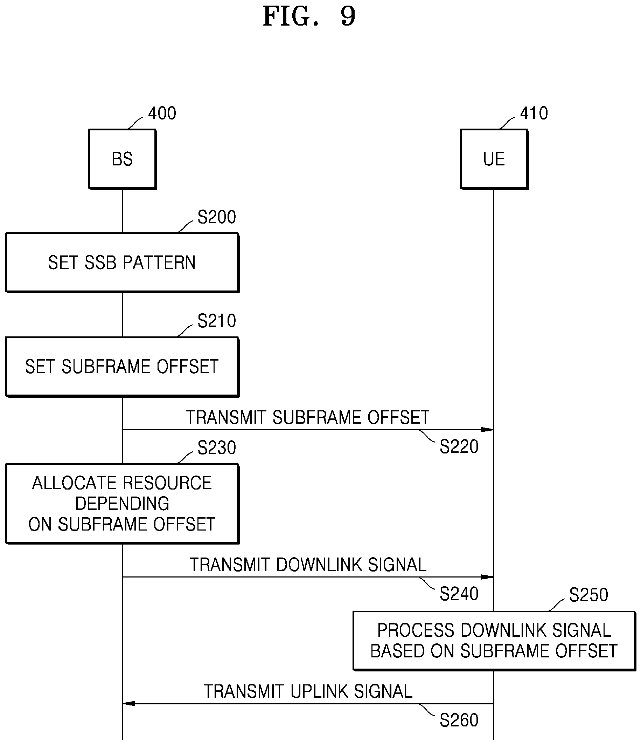

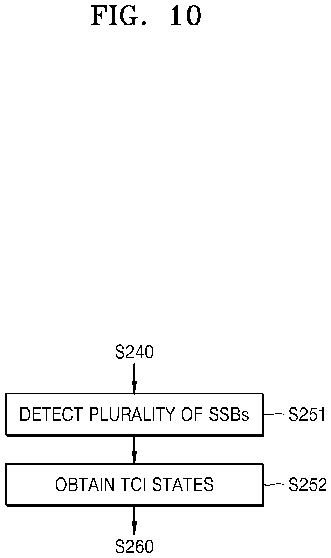

FIG. 9 is a flowchart for explaining a method for wireless communications, according to one or more aspects of the present disclosure, and FIG. 10 is a flowchart for describing the example operation S250 of FIG. 9 in additional detail. Hereinafter, the communication system may include a base station 400 and a user equipment 410.

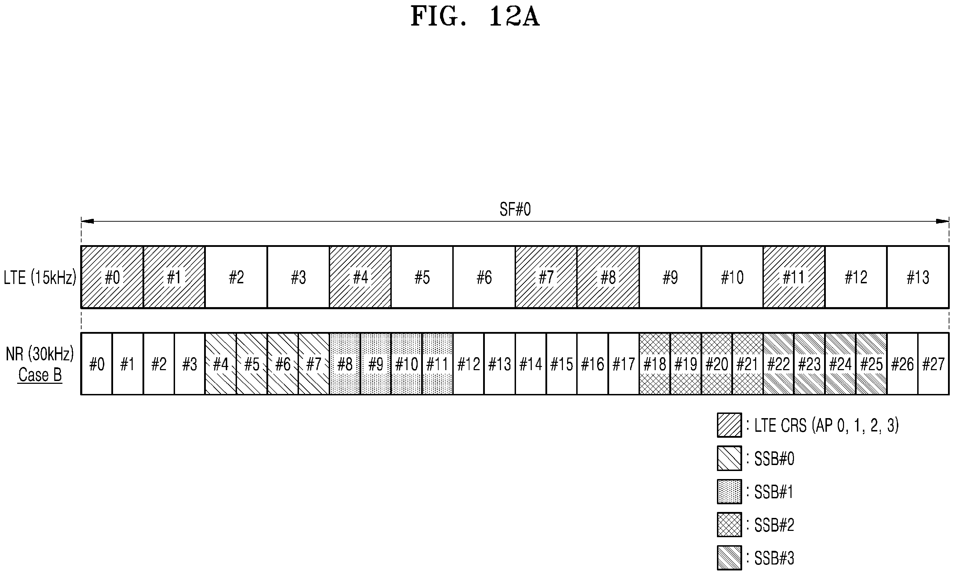

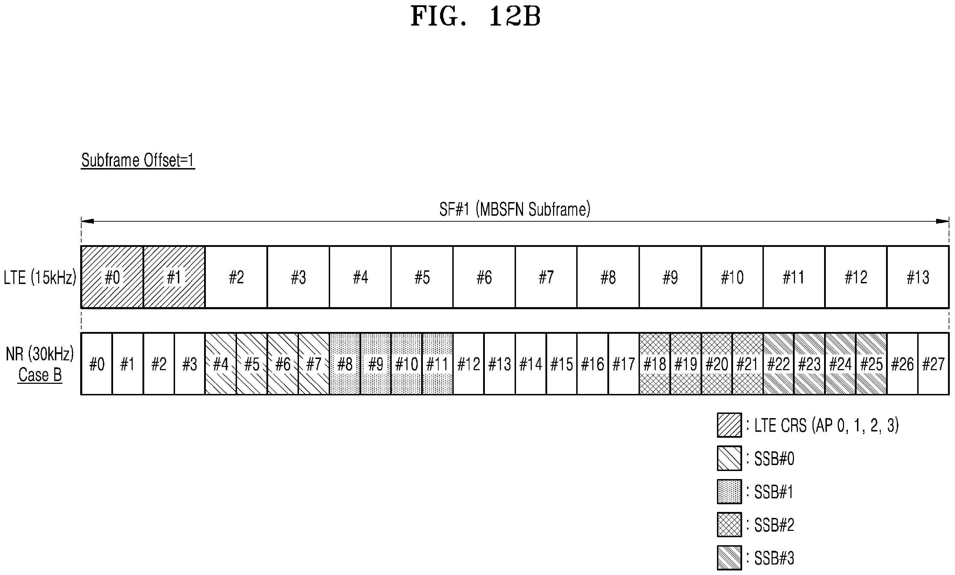

Referring to FIG. 9, in operation S200, the base station 400 may set an SSB pattern of an NR network. As an example, the SSB pattern may be set based on at least one of a subcarrier spacing of the NR network, a number of SSBs during a time period (e.g., during one SSB burst set period, during a subframe or other time period, etc.), and a frequency domain of resources to which the SSBs are allocated. For example, the base station 400 may set the SSB pattern as 'Case A' as shown in FIGS. 8A and 8B, or may set the SSB pattern as 'Case B' as shown in FIGS. 12A and 12B.

In operation S210, the base station 400 may set a subframe offset in subframe units between the NR network and the LTE network based on the SSB pattern and the CRS pattern of the LTE network. For example, the base station 400 may receive information about the CRS pattern of the LTE network from another base station, or the base station 400 may directly set the CRS pattern of the LTE network. The base station 400 may set the subframe offset to minimize overlap between the SSB and the CRS based on the SSB pattern and the CRS pattern of the LTE network. In an example embodiment, the pattern of the CRS of the LTE network may include settings for the MBSFN subframe.

In operation S220, the base station 400 may transmit the subframe offset to the user equipment 410. For example, the base station 400 may transmit the subframe offset to the user equipment 410 through any one of RRC signaling, DCI signaling, and MAC signaling.

In operation S230, the base station 400 may assign a resource to the signals of the NR network, including a plurality of SSBs, depending on the subframe offset. As an example, the base station 400 may change the radio frame boundary of the NR network by a subframe offset so that a plurality of SSBs overlap with subframes set as MBSFN subframes.

In operation S240, the base station 400 may transmit a downlink signal, to which the resource is allocated, to the user equipment 410 in operation S230. For example, the downlink signal may be transmitted to the user equipment 410 as a PDSCH, and may include a plurality of SSBs. In some embodiments, the downlink signal may be an NR PDSCH.

In operation S250, the user equipment 410 may process the downlink signal based on the subframe offset. In operation S260, the user equipment 410 may transmit an uplink signal to the base station 400 based on the processed downlink signal. In some embodiments, the operation of processing the downlink signal may include an operation of detecting or decoding the downlink signal, and may include an operation of obtaining a variety of information included in the downlink signal.

Referring further to FIG. 10, in operation S251 subsequent to operation S240, the base station 400 may detect a plurality of SSBs based on the subframe offset. In operation S252, the base station 400 may obtain TCI states through the detected SSBs. Thereafter, operation S260 may be subsequently performed. In some embodiments, when the downlink signal is an NR PDSCH, the base station 400 may perform rate matching on the CRS of the LTE network based on the subframe offset to perform decoding on the NR PDSCH.

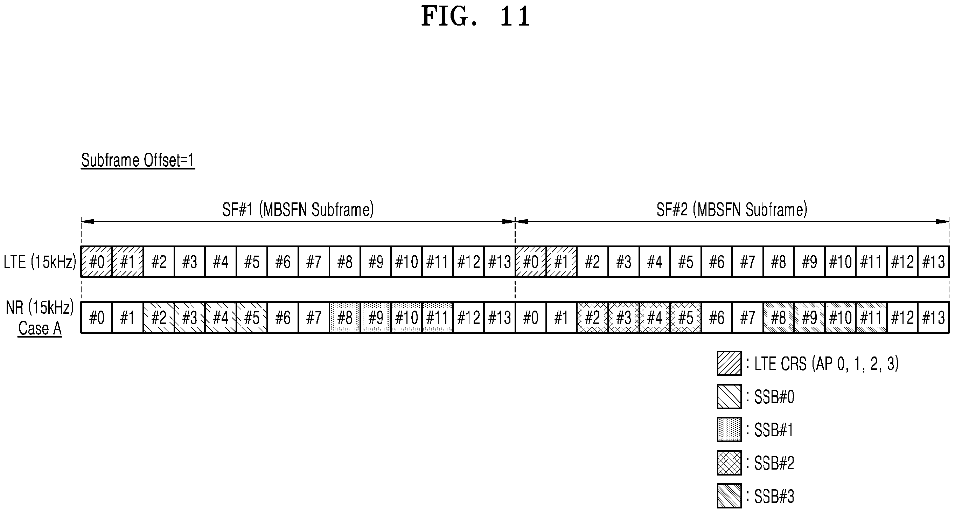

FIG. 11 is a diagram for explaining a method of operating a base station according to one or more aspects of the present disclosure. FIG. 11 is assuming that MBSFN subframes are set in the second and third subframes SF#1 and SF#2, and is described in comparison with the example shown in FIG. 8B.

Referring to FIGS. 8B and 11, the base station may set the subframe offset to '1' based on the SSB pattern and the MBSFN subframe setting. The base station may move the radio frame boundary of the NR network of FIG. 8B by '1' subframe offset. That is, as shown in FIG. 8B, the base station may perform resource allocation for the NR network such that the first to fourth SSBs SSB#0 to SSB#3 located in the first and second subframes SF#0 and SF#1 are located in the second and third subframes SF#1 and SF#2 in which MBSFN subframes are set.

In this way, the base station may use all of the first to fourth SSBs SSB#0 to SSB#3 by asynchronously operating the NR network with the LTE network so that the first to fourth SSBs SSB#0 to SSB#3 do not overlap with LTE CRS.

FIGS. 12A and 12B are diagrams for explaining one or more aspects of the present disclosure. FIG. 12A and 12B show overlapping LTE network resources and NR network resources in DSS, and it is assumed that the subcarrier spacing of the LTE network is '15 kHz', the subcarrier spacing of the NR network is '30 kHz', and the pattern of SSBs of the NR network is 'Case B'. However, this is only an example embodiment, and inventive aspects of the present disclosure are not limited thereto, and it may be applied to other embodiments. In some aspects, it may be assumed that the first subframe SF#0 is a normal subframe (e.g., or any subframe configured as a non-MBSFN subframe), and the second subframe SF#1 is configured as an MBSFN subframe.

Referring to FIG. 12A, the first subframe SF#0 may include first to 14th symbols #0 to #13 corresponding to the LTE network, and include first to twenty-eighth symbols #0 to #27 corresponding to the NR network. In the first subframe SF#0, an LTE CRS may be allocated to the 1st, 2nd, 5th, 8th, 9th, and 12th symbols #0, #1, #4, #7, #8, and #11 of the LTE network depending on the number of antenna ports. A first SSB SSB#0 may be allocated to the fifth to eighth symbols #4 to #7 of the NR network, a second SSB SSB#1 may be allocated to the ninth to twelfth symbols #8 to #11 of the NR network, a third SSB SSB#2 may be allocated to the 19th to 22nd symbols #18 to #21 of the NR network, and a fourth SSB SSB#3 may be allocated to the 23rd to 26th symbols #22 to #25 of the NR network.

As shown in FIG. 12A, the second and fourth SSBs SSB#1 and SSB#3 overlap the symbols #4 and #11 of the LTE network to which CRS is assigned, so it may be difficult for the base station to communicate using the second and fourth SSBs SSB#1 and SSB#3.

Referring further to FIG. 12B, the base station may set a subframe offset to '1' based on an SSB pattern and an MBFSN subframe setting. The base station may move a radio frame boundary of the NR network of FIG. 12A by the subframe offset of '1'. That is, as shown in FIG. 12A, the base station may perform resource allocation for the NR network so that the first to fourth SSBs SSB#0 to SSB#3 located in the first subframe SF#0 are located in the second subframe SF#1 in which the MBSFN subframe is set. As such, the base station may operate NR network-based communication with the user equipment by using all of the first to fourth SSBs SSB#1 to SSB#4.

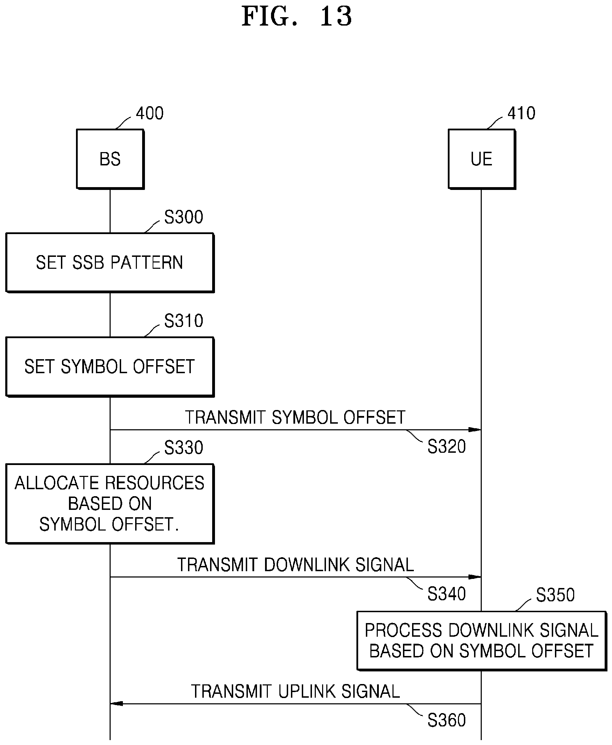

FIG. 13 is a flowchart for explaining a method for wireless communications, according to one or more aspects of the present disclosure. Hereinafter, the communication system may include a base station 400 and a user equipment 410.

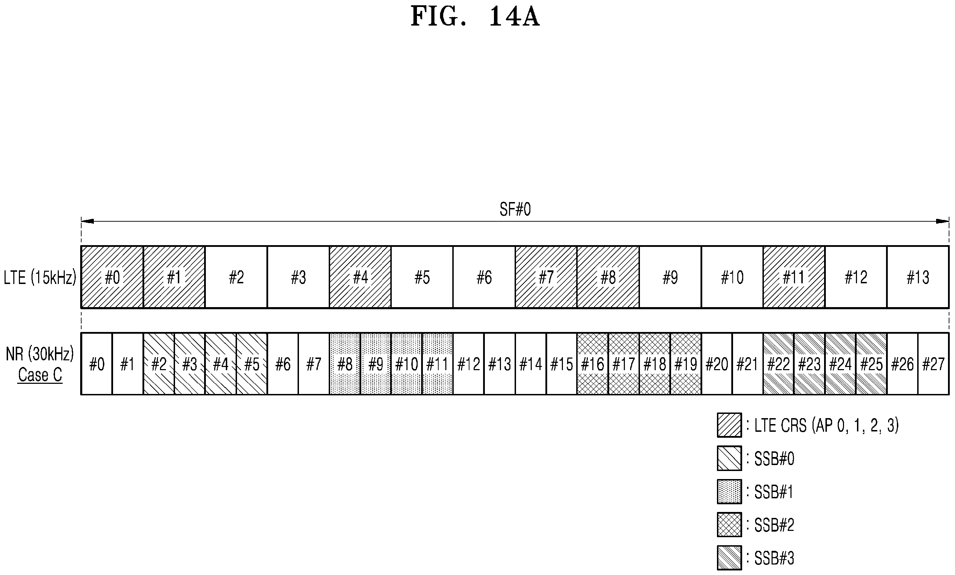

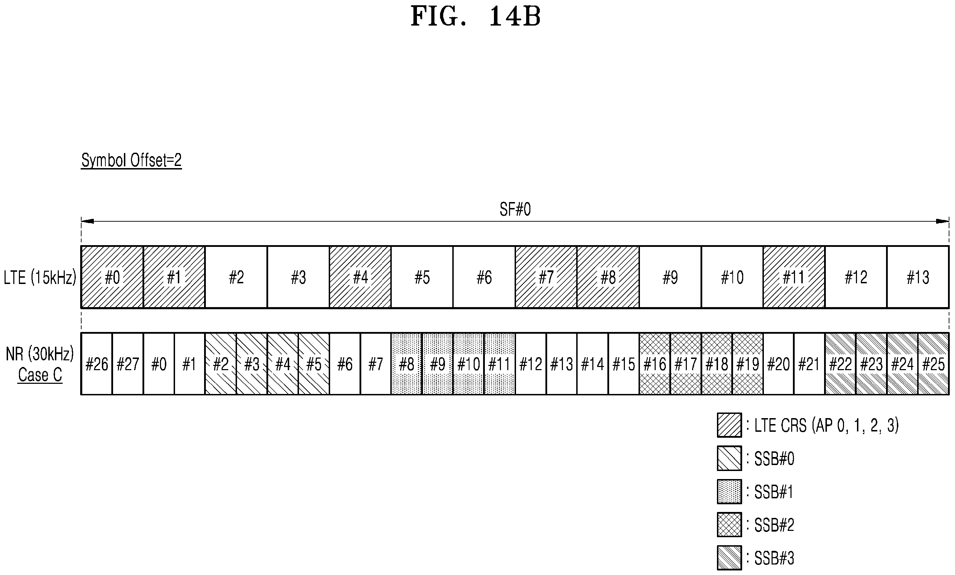

Referring to FIG. 13, in operation S300, the base station 400 may set an SSB pattern of an NR network. For example, the base station 400 may set the SSB pattern to 'Case C' as in FIGS. 14A and 14B (e.g., as described in more detail herein).

In operation S310, the base station 400 may set a symbol offset in symbol units between the NR network and an LTE network based on the SSB pattern and a CRS pattern of the LTE network. The symbol offset may be set based on the NR network and, in some embodiments, the symbol offset may also be set based on the LTE network. As an example, the base station 400 may set the symbol offset for minimizing overlap between the SSB and the CRS based on the SSB pattern and the CRS pattern of the LTE network. In an example embodiment, the pattern of the CRS of the LTE network may include the number of antenna ports of the LTE network.

In operation S320, the base station 400 may transmit the symbol offset to the user equipment 410. For example, the base station 400 may transmit the symbol offset to the user equipment 410 through any of RRC signaling, DCI signaling, MAC signaling, etc.

In operation S330, the base station 400 may allocate resources for signals of an NR network including a plurality of SSBs based on a symbol offset. As an example, the base station 400 may change the radio frame boundary of the NR network by a symbol offset so that the plurality of SSBs do not overlap with the CRS of the LTE network (or the overlap is minimized).

In operation S340, the base station 400 may transmit a downlink signal, to which the resource is allocated, to the user equipment 410 in operation S330. For example, the downlink signal may be transmitted to the user equipment 410 as a PDSCH, and may include a plurality of SSBs. In some embodiments, the downlink signal may be an NR PDSCH.

In operation S350, the user equipment 410 may process the downlink signal based on the symbol offset. In operation S360, the user equipment 410 may transmit an uplink signal to the base station 400 based on the processed downlink signal.

FIGS. 14A and 14B are diagrams for explaining one or more aspects of the present disclosure. FIGS. 14A and 14B show overlapping LTE network resources and NR network resources in DSS, and it is assumed that a subcarrier spacing of an LTE network is '15 kHz', a subcarrier spacing of an NR network is '30 kHz', and a pattern of SSBs of the NR network is 'Case C'. However, this is only an example embodiment, and inventive aspects of the present disclosure are not limited thereto and may be applied to other embodiments. In some aspects, it may be assumed that a first subframe SF#0 is a normal subframe (e.g., a non-MBSFN subframe).

Referring to FIG. 14A, the first subframe SF#0 may include first to 14th symbols #0 to #13 corresponding to the LTE network, and may include first to twenty-eighth symbols #0 to #27 corresponding to the NR network. In the first subframe SF#0, an LTE CRS may be allocated to the 1st, 2nd, 5th, 8th, 9th, and 12th symbols #0, #1, #4, #7, #8, and #11 of the LTE network depending on the number of antenna ports. A first SSB SSB#0 may be allocated to the third to sixth symbols #2 to #5 of the NR network, a second SSB SSB#1 may be allocated to the ninth to twelfth symbols #8 to #11 of the NR network, a third SSB SSB#2 may be allocated to the 17th to 20th symbols #16 to #19 of the NR network, and a fourth SSB SSB#3 may be allocated to the 23rd to 26th symbols #22 to #25 of the NR network.

As shown in FIG. 14A, the first and fourth SSBs SSB#0 to SSB#3 overlap the symbols #1, #4, #8, and #11 of the LTE network to which CRS is assigned, so it may be difficult for the base station to communicate using the first to fourth SSBs SSB#0 to SSB#3.

Referring further to FIG. 14B, the base station may set a symbol offset to '2' based on the NR network, based on a pattern of SSB and a pattern of LTE CRS. The base station may move a radio frame boundary of the NR network of FIG. 14A by the symbol offset of '2'. That is, the base station may perform resource allocation for the NR network so that the first to fourth SSBs SSB#0 to SSB#3 do not overlap with the LTE CRS as in FIG. 14A. As such, the base station may operate NR network-based communication with the user equipment by using all of the first to fourth SSBs SSB#1 to SSB#4.

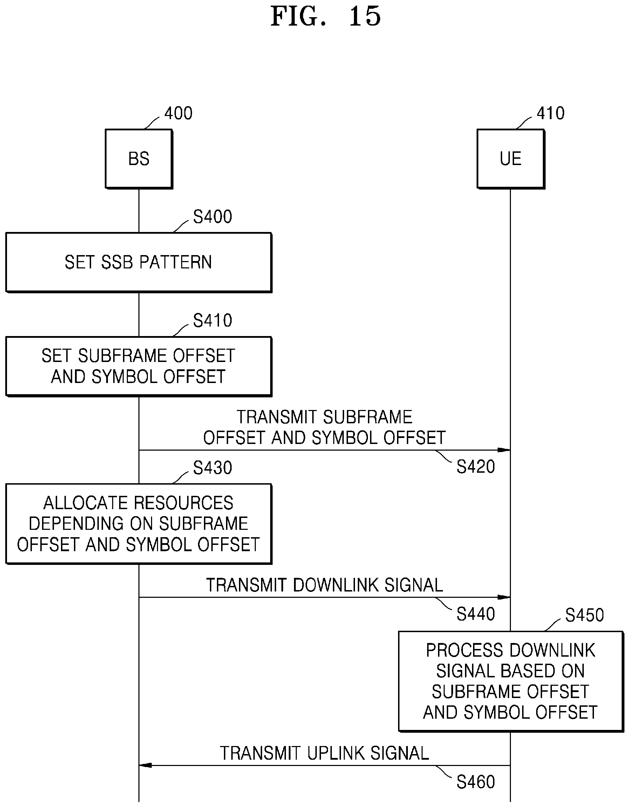

FIG. 15 is a flowchart illustrating a method for wireless communications, according to one or more aspects of the present disclosure. Hereinafter, the communication system may include a base station 400 and a user equipment 410.

Referring to FIG. 15, in operation S400, the base station 400 may set the SSB pattern of the NR network.

In operation S410, the base station 400 may set a subframe offset and a symbol offset between the NR network and the LTE network based on an SSB pattern and a CRS pattern of the LTE network. As an example, the base station 400 may set the subframe offset and the symbol offset for minimizing overlap between the SSB and the CRS based on the SSB pattern and the CRS pattern of the LTE network. In some embodiments, the pattern of the CRS of the LTE network may include the configuration regarding the MBFSN subframe and the number of antenna ports of the LTE network.

In operation S420, the base station 400 may transmit the subframe offset and the symbol offset to the user equipment 410. For example, the base station 400 may transmit a subframe and the symbol offset to the user equipment 410 through any one of RRC signaling, DCI signaling, and MAC signaling.

In operation S430, the base station 400 may allocate resources for signals of the NR network including a plurality of SSBs, depending on the subframe offset and the symbol offset. As an example, the base station 400 may change the radio frame boundary of the NR network by a subframe offset and the symbol offset so that the plurality of SSBs do not overlap with the CRS of the LTE network (or such that the overlap is minimized).

In operation S440, the base station 400 may transmit the downlink signal to which resource is allocated to the user equipment 410 in operation S430. For example, the downlink signal may be transmitted to the user equipment 410 as a PDSCH, and may include a plurality of SSBs. In some embodiments, the downlink signal may be an NR PDSCH.

In operation S450, the user equipment 410 may process the downlink signal based on the subframe offset and the symbol offset. In operation S460, the user equipment 410 may transmit an uplink signal to the base station 400 based on the processed downlink signal.

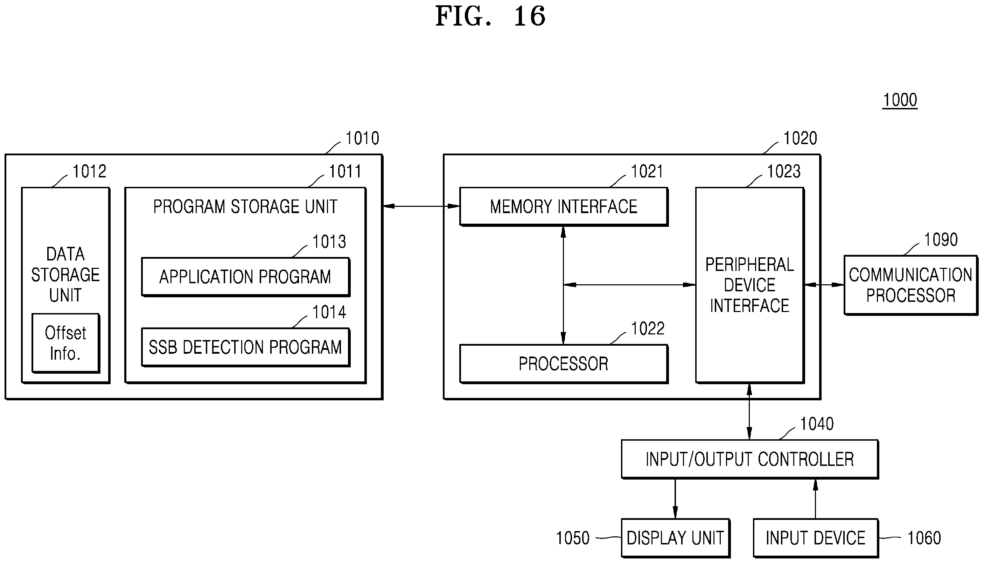

FIG. 16 is a block diagram illustrating an electronic device 1000 according to one or more aspects of the present disclosure. The electronic device 1000 may be a user equipment according to an example embodiment of present disclosure.

Referring to FIG. 16, the electronic device 1000 may include a memory 1010, a processor unit 1020, an input/output controller 1040, a display unit 1050, an input device 1060, and a communication processor 1090. Here, there may be a plurality of memories 1010. The description of each component is as follows.

The memory 1010 may include a program storage unit 1011 that stores a program for controlling the operation of the electronic device 1000 and a data storage unit 1012 that stores data generated during program execution. The data storage unit 1012 may store data necessary for the operation of an application program 1013 and an SSB detection program 1014. The data storage unit 1012 may receive and store the offset information (e.g., Offset Info.) generated by determining an asynchronous operation method between the NR network and the LTE network according to the example embodiments of the present disclosure from the base station.

The program storage unit 1011 may include the application program 1013 and the SSB detection program 1014. Here, a program included in the program storage unit 1011 may be expressed as an instruction set of instructions. The application program 1013 may include program code for executing various applications operating in the electronic device 1000. That is, the application program 1013 may include code (or commands) related to various applications driven by a processor 1022. The SSB detection program 1014 may include code (or commands) for detecting SSBs based on the offset information (e.g., Offset Info.) according to example embodiments of the present disclosure.

In an example embodiment, the processor 1022 may detect SSBs from a downlink signal (or a PDSCH) received from the base station by executing the SSB detection program 1014, and obtain TCI states from the detected SSBs. The processor 1022 may perform NR network-based communication with a base station based on the obtained TCI states.

In addition, the electronic device 1000 may include a communication processor 1090 for performing a communication function for voice communication and data communication. A peripheral device interface 1023 may control the connection between the input/output controller 1040, the communication processor 1090, the processor 1022, and the memory interface 1021. The processor 1022 controls a plurality of base stations to provide a corresponding service using at least one software program. In this case, the processor 1022 may execute at least one program stored in the memory 1010 to provide a service corresponding to the program.

A processor is an intelligent hardware device, (e.g., a general-purpose processing component, a digital signal processor (DSP), a central processing unit (CPU), a graphics processing unit (GPU), a microcontroller, an application specific integrated circuit (ASIC), a field programmable gate array (FPGA), a programmable logic device, a discrete gate or transistor logic component, a discrete hardware component, or any combination thereof). In some cases, the processor is configured to operate a memory array using a memory controller. In other cases, a memory controller is integrated into the processor. In some cases, the processor is configured to execute computer-readable instructions stored in a memory to perform various functions. In some embodiments, a processor includes special purpose components for modem processing, baseband processing, digital signal processing, or transmission processing.

Examples of a memory device include random access memory (RAM), read-only memory (ROM), or a hard disk. Examples of memory devices include solid state memory and a hard disk drive. In some examples, memory is used to store computer-readable, computer-executable software including instructions that, when executed, cause a processor to perform various functions described herein. In some cases, the memory contains, among other things, a basic input/output system (BIOS) which controls basic hardware or software operation such as the interaction with peripheral components or devices. In some cases, a memory controller operates memory cells. For example, the memory controller can include a row decoder, column decoder, or both. In some cases, memory cells within a memory store information in the form of a logical state.

The input/output controller 1040 may provide an interface between an input/output device, such as the display unit 1050 and the input device 1060, and the peripheral device interface 1023. The display unit 1050 displays status information, input text, a moving picture, a still picture, and the like. For example, the display unit 1050 may display application program information driven by the processor 1022. A display unit 1050 may comprise a conventional monitor, a monitor coupled with an integrated display, an integrated display (e.g., an LCD display), or other means for viewing associated data or processing information. Output devices other than the display unit 1050 can be used, such as printers, other computers or data storage devices, and computer networks.

The input device 1060 may provide input data generated by selection of the electronic device to the processor unit 1020 through the input/output controller 1040. In this case, the input device 1060 may include a keypad including at least one hardware button and a touch pad for sensing touch information. For example, the input device 1060 may provide touch information, such as a touch sensed through the touch pad, a touch movement, and a touch release, to the processor 1022 through the input/output controller 1040. Generally, input device 1060 may be a computer mouse, keyboards, keypads, trackballs, and voice recognition devices. An input device 1060 may include any combination of devices that allow users to input information into a computing device, such as buttons, a keyboard, switches, and/or dials. In addition, the input device 1060 may include a touch-screen digitizer overlaid onto the display that can sense touch and interact with the display.

An input/output controller 1040 may manage input and output signals for a device. input/output controller 1040 may also manage peripherals not integrated into a device. In some cases, an input/output controller 1040 may represent a physical connection or port to an external peripheral. In some cases, an input/output controller 1040 may utilize an operating system such as iOS®, ANDROID®, MS-DOS®, MS-WINDOWS®, OS/2®, UNIX®, LINUX®, or another known operating system. In other cases, an input/output controller 1040 may represent or interact with a modem, a keyboard, a mouse, a touchscreen, or a similar device. In some cases, an input/output controller 1040 may be implemented as part of a processor. In some cases, a user may interact with a device via input/output controller 1040 or via hardware components controlled by an input/output controller 1040.

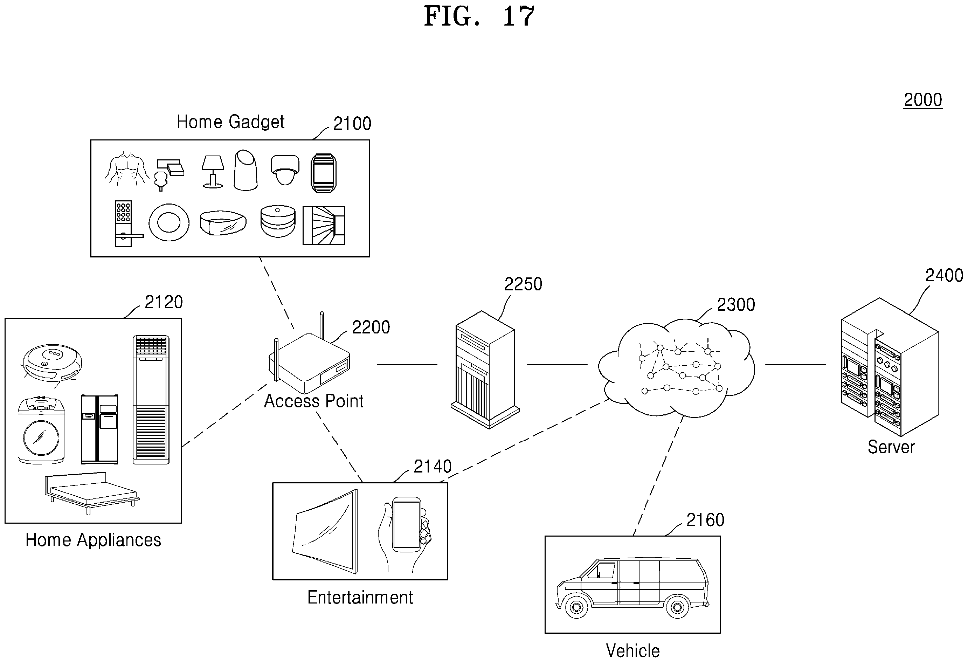

FIG. 17 is a conceptual diagram illustrating an example Internet of things (IoT) network system 2000 to which one or more aspects of the present disclosure may be applied.

Referring to FIG. 17, the IoT network system 2000 may include a plurality of IoT devices 2100, 2120, 2140, and 2160, an access point 2200, a gateway 2250, a wireless network 2300, and a server 2400. The IoT may refer to a network between things using wired/wireless communication.

Each of the IoT devices 2100, 2120, 2140, and 2160 may form a group based on characteristics of each IoT device. For example, IoT devices may be grouped into a home gadget group 2100, a home appliance/furniture group 2120, an entertainment group 2140, or a vehicle group 2160. The plurality of IoT devices 2100, 2120, and 2140 may be connected to a communication network through the access point 2200 or connected to other IoT devices. The access point 2200 may be embedded in one IoT device. The gateway 2250 may change a protocol to connect the access point 2200 to an external wireless network. The IoT devices 2100, 2120, and 2140 may be connected to an external communication network through the gateway 2250. The wireless network 2300 may include the Internet and/or a public network. The plurality of IoT devices 2100, 2120, 2140, and 2160 may be connected to the server 2400 providing a predetermined service through the wireless network 2300, and a user may use a service through at least one of the plurality of IoT devices 2100, 2120, 2140, and 2160. The plurality of IoT devices 2100, 2120, 2140, and 2160 each determine an asynchronous operation method between the NR network and the LTE network according to example embodiments of the present disclosure, and may minimize overlap between the SSBs of the NR network and the CRS of the LTE network using the determined asynchronous operation method. However, this is only an example embodiment, and the example embodiments of the present disclosure may be applied to heterogeneous networks in addition to the NR network and the LTE network.

**Claims**

1. A communications system comprising:

   a base station configured to support dynamic spectrum sharing (DSS) between a first network and a second network; and
   a user equipment configured to communicate with the base station based on the first network,
   **characterised by**:

      the base station is configured to determine an asynchronous operation method between the first network and the second network based on a first pattern type for a plurality of synchronization signal blocks (SSBs) corresponding to the first network and a second pattern type for a reference signal corresponding to the second network;

wherein the first pattern type includes at least one of: a subcarrier spacing in the first network, a number of SSBs during a period, and a frequency domain of one or more resources allocated to the plurality of SSBs;

wherein the second pattern type includes at least one of: a number of antenna ports in the second network and a configuration associated with a multicast-broadcast single frequency network (MBSFN) subframe;

the base station is configured to determine a time offset between resources of the first network and resources of the second network, and

the determined asynchronous operation method minimizes overlap between resources allocated to the plurality of SSBs and resources allocated to the reference signal based on the determined time offset.

2. The communications system of claim 1, wherein:

the first network comprises a New Radio (NR) network,
the second network comprises a Long Term Evolution (LTE) network, and
the reference signal comprises a cell reference signal (CRS).

3. The communications system of any preceding claim, wherein the time offset includes at least one of: a subframe offset in units of subframes and a symbol offset in units of symbols.

4. The communications system of any preceding claim, wherein, based on the determined asynchronous operation method, the base station is configured to allocate resources such that at least one subframe allocated as a multicast-broadcast single frequency network (MBSFN) subframe of the second network overlaps with the resources allocated to the plurality of SSBs.

5. The communications system of any preceding claim, wherein, based on the determined asynchronous operation method, the base station is configured to allocate resources such that resources allocated to the plurality of SSBs do not overlap resources allocated to the reference signal.

6. The communications system of any preceding claim, wherein:

the base station is configured to transmit information about the determined asynchronous operation method to the user equipment, and
the user equipment is configured to detect the plurality of SSBs based on the information.

7. The communications system of claim 6, wherein the information includes a time offset between resources of the first network and resources of the second network.

8. An apparatus configured to support dynamic spectrum sharing (DSS) between a New Radio (NR) network and a Long Term Evolution (LTE) network, the apparatus comprising:

a plurality of radio frequency (RF) transceivers;
a processing circuit configured to process signals received via the plurality of RF transceivers or signals to be transmitted via the plurality of RF transceivers; and
**characterised by**:

a controller configured to set a time offset between first resources allocated to first signals corresponding to the NR network including a plurality of synchronization signal blocks (SSBs) and second resources allocated to second signals corresponding to the LTE network including a reference signal, wherein the time offset is set based on a first pattern type for the plurality of SSBs corresponding to the NR network and a second pattern type for the reference signal corresponding to the LTE network;

wherein the first pattern type includes at least one of: a subcarrier spacing in the NR network, a number of SSBs during one SSB burst set period, and a frequency domain of resources allocated to the plurality of SSBs; and

wherein the second pattern type includes at least one of: a number of antenna ports in the LTE network and a configuration related to a multicast-broadcast single frequency network (MBSFN) subframe,

wherein the controller is configured to change, around a time axis, the first resources such that the second resources do not overlap the plurality of SSBs based on the set time offset.

9. The apparatus of claim 8, wherein the controller is configured to change, around a time axis, the first resources such that at least one subframe allocated as a multicast-broadcast single frequency network (MBSFN) subframe of the LTE network overlaps the plurality of SSBs based on the set time offset.

**Patentansprüche**

1. Kommunikationssystem, Folgendes umfassend:

   eine Basisstation, die konfiguriert ist, um eine dynamische gemeinsame Frequenznutzung (DSS) zwischen einem ersten Netzwerk und einem zweiten Netzwerk zu unterstützen; und
   ein Benutzergerät, das konfiguriert ist, um mit der Basisstation, basierend auf dem ersten Netzwerk, zu kommunizieren,
   **dadurch gekennzeichnet, dass**:

   die Basisstation konfiguriert ist, um ein asynchrones Betriebsverfahren zwischen dem ersten Netzwerk und dem zweiten Netzwerk basierend auf einem ersten Mustertyp für eine Vielzahl von Synchronisationssignalblöcken (SSBs), die dem ersten Netzwerk entsprechen, und einem zweiten Mustertyp für ein Referenzsignal, das dem zweiten Netzwerk entspricht, zu bestimmen;
   wobei der erste Mustertyp mindestens einen von Folgenden einschließt: einen Subträgerabstand in dem ersten Netzwerk, eine Anzahl von SSBs während eines Zeitraums, und einen Frequenzbereich von einer oder mehreren Ressourcen, die der Vielzahl von SSBs zugewiesen sind;
   wobei der zweite Mustertyp mindestens eine von Folgenden einschließt: eine Anzahl von Antennenanschlüssen in dem zweiten Netzwerk und eine Konfiguration, die einem Multicast-Broadcast-Single-Frequency-Network-(MBSFN)-Subframe zugeordnet ist;
   die Basisstation konfiguriert ist, um einen Zeitversatz zwischen Ressourcen des ersten Netzwerks und Ressourcen des zweiten Netzwerks zu bestimmen, und
   das bestimmte asynchrone Betriebsverfahren eine Überlappung zwischen Ressourcen, die der Vielzahl von SSBs zugewiesen sind, und Ressourcen, die dem Referenzsignal zugewiesen sind, basierend auf dem bestimmten Zeitversatz, minimiert.

2. Kommunikationssystem nach Anspruch 1, wobei:

   das erste Netzwerk ein New-Radio(NR)-Netzwerk umfasst,
   das zweite Netzwerk ein Long-Term-Evolution(LTE)-Netzwerk umfasst, und
   das Referenzsignal ein Zellenreferenzsignal (CRS) umfasst.

3. Kommunikationssystem nach einem der vorhergehenden Ansprüche, wobei der Zeitversatz mindestens einen von Folgenden einschließt: einen Subframe-Versatz in Einheiten von Subframes und einen Symbolversatz in Einheiten von Symbolen.

4. Kommunikationssystem nach einem der vorhergehenden Ansprüche, wobei die Basisstation, basierend auf dem bestimmten asynchronen Betriebsverfahren, konfiguriert ist, um Ressourcen so zuzuweisen, dass sich mindestens ein Subframe, der als ein Multicast-Broadcast-Single-Frequency-Network(MBSFN)-Subframe des zweiten Netzwerks zugewiesen ist, mit den Ressourcen überlappt, die der Vielzahl von SSBs zugewiesen sind.

5. Kommunikationssystem nach einem der vorhergehenden Ansprüche, wobei die Basisstation basierend auf dem bestimmten asynchronen Betriebsverfahren konfiguriert ist, um Ressourcen so zuzuweisen, dass der Vielzahl von SSBs zugewiesene Ressourcen nicht dem Referenzsignal zugewiesene Ressourcen überlappen.

6. Kommunikationssystem nach einem der vorhergehenden Ansprüche, wobei:

   die Basisstation konfiguriert ist, um Informationen über das bestimmte asynchrone Betriebsverfahren an das Benutzergerät zu übertragen, und
   das Benutzergerät konfiguriert ist, um die Vielzahl von SSBs, basierend auf den Informationen, zu erkennen.

7. Kommunikationssystem nach Anspruch 6, wobei die Information einen Zeitversatz zwischen Ressourcen des ersten Netzwerks und Ressourcen des zweiten Netzwerks einschließen.

8. Vorrichtung, die konfiguriert ist, um eine dynamische gemeinsame Frequenznutzung (DSS) zwischen einem New-Radio(NR)-Netzwerk und einem Long-Term-Evolution(LTE)-Netzwerk zu unterstützen, wobei die Vorrichtung Folgendes umfasst:

eine Vielzahl von Hochfrequenz(HF)-Sendeempfängern;
eine Verarbeitungsschaltung, die konfiguriert ist, um über die Vielzahl von HF-Sendeempfängern empfangene Signale oder über die Vielzahl von HF-Sendeempfängern zu übertragende Signale zu verarbeiten; und **gekennzeichnet durch**:

eine Steuerung, die konfiguriert ist, um einen Zeitversatz zwischen ersten Ressourcen, die ersten Signalen zugewiesen sind, die dem NR-Netzwerk entsprechen, das eine Vielzahl von Synchronisationssignalblöcken (SSBs) einschließt, und zweiten Ressourcen, die zweiten Signalen zugewiesen sind, die dem LTE-Netzwerk entsprechen, das ein Referenzsignal einschließt, einzustellen, wobei der Zeitversatz basierend auf einem ersten Mustertyp für die Vielzahl von SSBs, die dem NR-Netzwerk entsprechen, und einem zweiten Mustertyp für das Referenzsignal, das dem LTE-Netzwerk entspricht, eingestellt wird;
wobei der erste Mustertyp mindestens eines von Folgenden einschließt: einen Unterträgerabstand in dem NR-Netzwerk, eine Anzahl von SSBs während eines SSB-Burst-Set-Zeitraums, und einen Frequenzbereich von Ressourcen, die der Vielzahl von SSBs zugewiesen sind; und
wobei der zweite Mustertyp mindestens eines von Folgenden einschließt: eine Anzahl von Antennenanschlüssen in dem LTE-Netzwerk und eine Konfiguration, die mit einem Multicast-Broadcast-Single-Frequency-Network(MBSFN)-Subframe in Beziehung steht,
wobei die Steuerung konfiguriert ist, um die ersten Ressourcen um eine Zeitachse herum so zu ändern, dass die zweiten Ressourcen die Vielzahl von SSBs, basierend auf dem eingestellten Zeitversatz, nicht überlappen.

9. Vorrichtung nach Anspruch 8, wobei die Steuerung konfiguriert ist, um die ersten Ressourcen um eine Zeitachse herum so zu ändern, dass mindestens ein Subframe, der als ein Multicast-Broadcast-Single-Frequency-Network(MBSFN)-Subframe des LTE-Netzwerks zugewiesen ist, die Vielzahl von SSBs auf der Grundlage des eingestellten Zeitversatzes überlappt.


**Revendications**

1. Système de communication comprenant :

une station de base configurée pour prendre en charge un partage dynamique du spectre (DSS) entre un premier réseau et un second réseau ; et
un équipement utilisateur configuré pour communiquer avec la station de base sur la base du premier réseau, **caractérisé en ce que** :

la station de base est configurée pour déterminer un procédé de fonctionnement asynchrone entre le premier réseau et le second réseau sur la base d'un premier type de motif pour une pluralité de blocs de signaux de synchronisation (SSB) correspondant au premier réseau et d'un second type de motif pour un signal de référence correspondant au second réseau ;
dans lequel le premier type de motif inclut au moins l'un parmi : un espacement de sous-porteuse dans le premier réseau, un certain nombre de SSB pendant une période, et un domaine de fréquence d'une ou de plusieurs ressources attribuées à la pluralité de SSB ;
dans lequel le second type de motif inclut au moins l'un parmi : un certain nombre de ports d'antenne dans le second réseau et une configuration associée à une sous-trame de réseau de diffusion/multidiffusion à fréquence unique (MBSFN) ;
la station de base est configurée pour déterminer un décalage temporel entre des ressources du premier réseau et des ressources du second réseau, et
le procédé de fonctionnement asynchrone déterminé minimise un chevauchement entre des ressources attribuées à la pluralité de SSB et des ressources attribuées au signal de référence sur la base du décalage temporel déterminé.

2. Système de communication selon la revendication 1, dans lequel :

le premier réseau comprend un réseau nouvelle radio (NR),

le second réseau comprend un réseau d'évolution à long terme (LTE), et

le signal de référence comprend un signal de référence de cellule (CRS).

3. Système de communication selon une quelconque revendication précédente, dans lequel le décalage temporel inclut au moins l'un parmi : un décalage de sous-trames dans des unités de sous-trames et un décalage de symboles dans des unités de symboles.

4. Système de communication selon une quelconque revendication précédente, dans lequel, sur la base du procédé de fonctionnement asynchrone déterminé, la station de base est configurée pour attribuer des ressources de telle sorte qu'au moins une sous-trame attribuée en tant que sous-trame de réseau de diffusion/multidiffusion à fréquence unique (MBSFN) du second réseau chevauche les ressources attribuées à la pluralité de SSB.

5. Système de communication selon une quelconque revendication précédente, dans lequel, sur la base du procédé de fonctionnement asynchrone déterminé, la station de base est configurée pour attribuer des ressources de telle sorte que des ressources attribuées à la pluralité de SSB ne chevauchent pas des ressources attribuées au signal de référence.

6. Système de communication selon une quelconque revendication précédente, dans lequel :

la station de base est configurée pour transmettre des informations concernant le procédé de fonctionnement asynchrone déterminé à l'équipement utilisateur, et

l'équipement utilisateur est configuré pour détecter la pluralité de SSB sur la base des informations.

7. Système de communication selon la revendication 6, dans lequel les informations incluent un décalage temporel entre des ressources du premier réseau et des ressources du second réseau.

8. Appareil configuré pour prendre en charge un partage dynamique du spectre (DSS) entre un réseau nouvelle radio (NR) et un réseau d'évolution à long terme (LTE), l'appareil comprenant :

une pluralité d'émetteurs-récepteurs radiofréquence (RF) ;

un circuit de traitement configuré pour traiter des signaux reçus *via* la pluralité d'émetteurs-récepteurs RF ou de signaux à transmettre *via* la pluralité d'émetteurs-récepteurs RF ; et **caractérisé par** :

un dispositif de commande configuré pour régler un décalage temporel entre des premières ressources attribuées à des premiers signaux correspondant au réseau NR incluant une pluralité de blocs de signaux de synchronisation (SSB) et des secondes ressources attribuées à des seconds signaux correspondant au réseau LTE incluant un signal de référence, dans lequel le décalage temporel est réglé sur la base d'un premier type de motif pour la pluralité de SSB correspondant au réseau NR et d'un second type de motif pour le signal de référence correspondant au réseau LTE ;

dans lequel le premier type de motif inclut au moins l'un parmi : un espacement de sous-porteuse dans le réseau NR, un certain nombre de SSB pendant une période d'ensembles de rafales de SSB, et un domaine de fréquence de ressources attribuées à la pluralité de SSB ; et

dans lequel le second type de motif inclut au moins l'un parmi : un certain nombre de ports d'antenne dans le réseau LTE et une configuration relative à une sous-trame de réseau de diffusion/multidiffusion à fréquence unique (MBSFN),

dans lequel le dispositif de commande est configuré pour modifier, autour d'un axe temporel, les premières ressources de telle sorte que les secondes ressources ne chevauchent pas la pluralité de SSB sur la base du décalage temporel réglé.

9. Appareil selon la revendication 8, dans lequel le dispositif de commande est configuré pour modifier, autour d'un axe temporel, les premières ressources de telle sorte qu'au moins une sous-trame attribuée en tant que sous-trame de réseau de diffusion/multidiffusion à fréquence unique (MBSFN) du réseau LTE chevauche la pluralité de SSB sur la base du décalage temporel réglé.

# FIG. 1

# FIG. 2

100
Base Station

110
Controller

112
Scheduler (for DSS)

130
Processing Circuit

142_1
RF Transceiver

144_1

142_2
RF Transceiver

144_2

142_n
RF Transceiver

144_n

120
Memory

# FIG. 3

150
UE

160
Controller

162
SSB Detector (In DSS)

180
Processing Circuit

192
RF Transceiver

194_1

194_m

170
Memory

# FIG. 4A

214
Radio frame

205
Subframe

Slot 206

212
Resource element

204 $N_{BW}$ subcarriers

210 $N_{RB}$ subcarriers

208
Resource block

FREQUENCY

TIME

$N_{symb}$ OFDM symbols
202

# FIG. 4B

# FIG. 5

# FIG. 6A

1 Radio frame (10ms)

1 Subframe (1ms)

| LTE/NR | SF#0 | SF#1 | SF#2 | SF#3 | SF#4 | SF#5 | SF#6 | SF#7 | SF#8 | SF#9 |

R_SSB#0    R_SSB#1

1 PRB (12 Subcarriers)

#0 #1 #2 #3 #4 #5 #6 #7 #8 #9 #10 #11 #12 #13

1 Slot (14 OFDM symbols)

: MBSFN Subframe

: Normal Subframe

: LTE PDCCH

: LTE CRS (AP 0, 1, 2, 3)

: NR PDSCH DMRS

: NR PDSCH

EP 4 120 715 B1

# FIG. 6B

# FIG. 7

```
          ( START )
              │
              ▼
┌──────────────────────────────┐
│  DETERMINE ASYNCHRONOUS       │
│  OPERATION METHOD BETWEEN      │── S100
│  NR NETWORK AND LTE            │
│  NETWORK IN DSS                │
└──────────────────────────────┘
              │
              ▼
┌──────────────────────────────┐
│  SIGNALING BASED ON THE        │
│  DETERMINED ASYNCHRONOUS       │── S110
│  OPERATION METHOD              │
└──────────────────────────────┘
              │
              ▼
           (  END  )
```

## FIG. 8A

LTE CRS (AP 0, 1, 2, 3)
SSB#0
SSB#1
SSB#2
SSB#3

# FIG. 8B

# FIG. 9

400

BS

410

UE

S200

SET SSB PATTERN

S210

SET SUBFRAME OFFSET

TRANSMIT SUBFRAME OFFSET

S220

S230

ALLOCATE RESOURCE
DEPENDING
ON SUBFRAME OFFSET

TRANSMIT DOWNLINK SIGNAL

S240

S250

PROCESS DOWNLINK SIGNAL
BASED ON SUBFRAME OFFSET

TRANSMIT UPLINK SIGNAL

S260

# FIG. 10

S240

DETECT PLURALITY OF SSBs — S251

OBTAIN TCI STATES — S252

S260

# FIG. 11

Subframe Offset=1

SF#1 (MBSFN Subframe)    SF#2 (MBSFN Subframe)

LTE (15kHz)  #0 #1 #2 #3 #4 #5 #6 #7 #8 #9 #10 #11 #12 #13 #0 #1 #2 #3 #4 #5 #6 #7 #8 #9 #10 #11 #12 #13

NR (15kHz)
Case A  #0 #1 #2 #3 #4 #5 #6 #7 #8 #9 #10 #11 #12 #13 #0 #1 #2 #3 #4 #5 #6 #7 #8 #9 #10 #11 #12 #13

: LTE CRS (AP 0, 1, 2, 3)

: SSB#0

: SSB#1

: SSB#2

: SSB#3

FIG. 12A

EP 4 120 715 B1

# FIG. 12B

EP 4 120 715 B1

Subframe Offset=1

SF#1 (MBSFN Subframe)

| LTE (15kHz) | #0 | #1 | #2 | #3 | #4 | #5 | #6 | #7 | #8 | #9 | #10 | #11 | #12 | #13 |
|---|---|---|---|---|---|---|---|---|---|---|---|---|---|---|

NR (30kHz)
Case B

| #0 | #1 | #2 | #3 | #4 | #5 | #6 | #7 | #8 | #9 | #10 | #11 | #12 | #13 | #14 | #15 | #16 | #17 | #18 | #19 | #20 | #21 | #22 | #23 | #24 | #25 | #26 | #27 |

: LTE CRS (AP 0, 1, 2, 3)

: SSB#0

: SSB#1

: SSB#2

: SSB#3

# FIG. 13

400

BS

410

UE

S300

SET SSB PATTERN

S310

SET SYMBOL OFFSET

TRANSMIT SYMBOL OFFSET

S320

S330

ALLOCATE RESOURCES
BASED ON
SYMBOL OFFSET.

TRANSMIT DOWNLINK SIGNAL

S340

S350

PROCESS DOWNLINK SIGNAL
BASED ON SYMBOL OFFSET

TRANSMIT UPLINK SIGNAL

S360

# FIG. 14A

SF#0

LTE (15kHz): #0 #1 #2 #3 #4 #5 #6 #7 #8 #9 #10 #11 #12 #13

NR (30kHz) Case C: #0 #1 #2 #3 #4 #5 #6 #7 #8 #9 #10 #11 #12 #13 #14 #15 #16 #17 #18 #19 #20 #21 #22 #23 #24 #25 #26 #27

: LTE CRS (AP 0, 1, 2, 3)
: SSB#0
: SSB#1
: SSB#2
: SSB#3

EP 4 120 715 B1

# FIG. 14B

EP 4 120 715 B1

Symbol Offset=2

**LTE (15kHz):** #0, #1, #2, #3, #4, #5, #6, #7, #8, #9, #10, #11, #12, #13

**NR (30kHz) Case C:** #26, #27, #0, #1, #2, #3, #4, #5, #6, #7, #8, #9, #10, #11, #12, #13, #14, #15, #16, #17, #18, #19, #20, #21, #22, #23, #24, #25

Legend:
- : LTE CRS (AP 0, 1, 2, 3)
- : SSB#0
- : SSB#1
- : SSB#2
- : SSB#3

# FIG. 15

400

BS

410

UE

S400

SET SSB PATTERN

S410

SET SUBFRAME OFFSET
AND SYMBOL OFFSET

TRANSMIT SUBFRAME
OFFSET AND SYMBOL OFFSET

S420

S430

ALLOCATE RESOURCES
DEPENDING ON SUBFRAME
OFFSET AND SYMBOL OFFSET

TRANSMIT DOWNLINK SIGNAL

S440

S450

PROCESS DOWNLINK
SIGNAL BASED ON
SUBFRAME OFFSET
AND SYMBOL OFFSET

TRANSMIT UPLINK SIGNAL

S460

# FIG. 16

1000

1010

1012

1011 PROGRAM STORAGE UNIT

DATA STORAGE UNIT

Offset Info.

1013 APPLICATION PROGRAM

1014 SSB DETECTION PROGRAM

1020

1021 MEMORY INTERFACE

1023 PERIPHERAL DEVICE INTERFACE

1022 PROCESSOR

1090 COMMUNICATION PROCESSOR

1040 INPUT/OUTPUT CONTROLLER

1050 DISPLAY UNIT

1060 INPUT DEVICE

EP 4 120 715 B1

# FIG. 17

Home Gadget 2100

2120

Home Appliances

Access Point 2200

2250

2140

Entertainment

2300

2160

Vehicle

2400

Server

2000

EP 4 120 715 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021022395 A1

- WO 2021029298 A1

**Non-patent literature cited in the description**

- **GOOGLE INC.** Views on dynamic spectrum sharing between LTE band 48 and NR band n48. *3GPP RAN WG4 Meeting #94-e, R4-2002048*

- **SAMSUNG ; KDDI ; NOKIA ; NOKIA SHANGHAI BELL**. Discussions on Rel-16 TEI. *3GPP TSG RAN WG1 #100-e e-Meeting, R1-2000895*